# EUROPEAN PATENT APPLICATION

(11) **EP 2 169 585 A1**
(43) Date of publication of application: **31.03.2010**
(21) Application number: 07790657.6
(22) Date of filing: 11.07.2007
(51) Int. Cl.: G06F 21/20, G06T 7/00

(54) **USER AUTHENTICATION JUDGING DEVICE, USER AUTHENTICATION JUDGING SYSTEM, USER AUTHENTICATION JUDGING PROGRAM AND USER AUTHENTICATION JUDGING METHOD**

(71) Applicant: Fujitsu Limited, Kawasaki-shi, Kanagawa 211-8588 (JP)
(72) Inventor: MORIHARA, Takashi, Kawasaki-shi Kanagawa 211-8588 (JP)
(74) Representative: Fenlon, Christine Lesley
(86) International application number: PCT/JP2007/063853
(87) International publication number: WO 2009/008077

(57) **Abstract**

A user authentication judging device stores therein proper environment information considered appropriate for a use environment of an information processing device, and stores therein a proper environment judging threshold set for each piece of the proper environment information. If changed environment information collected by detecting a change in the use environment of the information processing device matches with any piece of the proper environment information, the user authentication judging device determines to authenticate the changed environment information, and if the collected changed environment information does not match with any piece of the proper environment information, the user authentication judging device does not determine to authenticate the changed environment information. If the changed environment information is authenticated, the user authentication judging device instructs reception of living body information from an applicant, and instructs setting of a proper environment judging threshold corresponding to the proper environment information matched with the changed environment information as an object to be compared with similarity calculated by performing verification. Upon receiving the living body information from the applicant, the user authentication judging device performs authentication judgment by verifying the living body information received from the applicant with registered living body information, by using the proper environment judging threshold set under instruction as an object to be compared with the similarity.

## Description

### TECHNICAL FIELD

The present invention relates to a user authentication judging device, a user authentication judging system, a user authentication judging program, and a user authentication judging method.

### BACKGROUND ART

In information processing devices such as personal computers (PCs), server computers, and mobile phones, personal authentication determines users authorized to use these information processing devices by using a combination of IDs and passwords. In recent years, this method has been replaced by personal authentication (biometric authentication) using living body information such as fingerprint, palm vein, finger vein, iris, voice, and face, which are difficult to fake, to determine users.

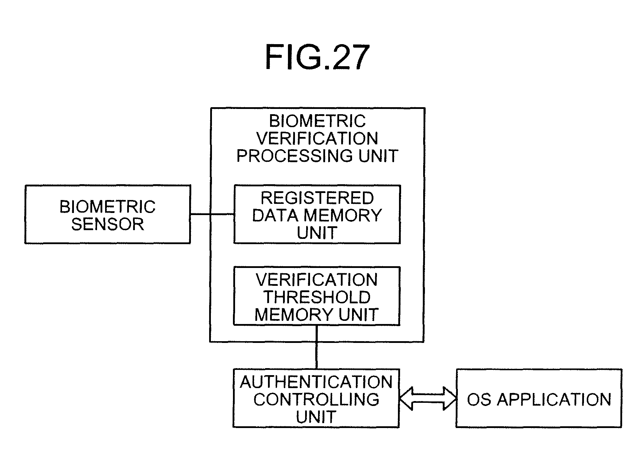

The biometric authentication of an information processing device, for example, is carried out by providing a new structure as illustrated in FIG. 27. FIG. 27 is a schematic for explaining a conventional technology.

For example, when a user tries to log in to a PC that is an information processing device that has started, an authentication controlling unit illustrated in FIG. 27 instructs a biometric verification processing unit to obtain living body information of the user who is trying to log in, based on a request from the operating system (OS) or application software. The biometric verification processing unit, for example, obtains living body information from a biometric sensor and generates verification data that is information required for verification from the obtained living body information, by displaying a living body information input request, e.g., "please provide living body information to the biometric sensor", on a screen of the PC. More specifically, the authentication controlling unit obtains a fingerprint image from a user who is trying to log in to the PC through the biometric sensor, and extracts fingerprint characteristics that are characteristic portions such as breaks and bifurcations in the fingerprint from the obtained fingerprint image, as verification data.

A registered data memory unit stores therein registered data (such as fingerprint characteristics) generated from the living body information of a user who is authorized to use the information processing device in advance. The biometric verification processing unit calculates the similarity, by comparing the generated verification data with the registered data stored in the registered data memory unit. If the calculated similarity is equal to or more than a threshold set in advance in a verification threshold memory unit, the biometric verification processing unit authenticates the user as the registered user him/herself, and does not authenticate anyone else. The authentication result obtained by the biometric verification processing unit is notified to the OS or the application software, through the authentication controlling unit. For example, if the user is authenticated as the user him/herself, the authentication controlling unit notifies the PC that the user is authorized to log in, and if the user is not authenticated as the user him/herself, the authentication controlling unit notifies the PC that the user is not authorized to log in. In this manner, in the biometric authentication, the security of information processing device is ensured by controlling the accuracy of personal authentication by setting a judging threshold used for authentication judgment in advance, and preventing a malicious third party from using the device.

In Patent Document 1, a technology that ensures the security of information processing device by performing environment authentication depending on the use environment of the information processing device, in addition to the biometric authentication, has been disclosed. More specifically, to perform electronic commerce (online shopping) by using a Web browser installed in a mobile phone, which is an information processing device, the software version of the Web browser is set in advance corresponding to the transaction amount, as environment condition in which the electronic commerce may be carried out. For example, if the transaction amount is equal to or more than 50,000 yen, it may be set so that the transaction is only authorized in the environment where the newest version of software is installed and the security hole is fixed.

The biometric authentication is carried out at the beginning of the electronic commerce. At the same time, the software version of the Web browser installed in the mobile phone and the transaction amount of a product that a user of the mobile phone wishes to purchase are collected as environment information. The execution of electronic commerce is only authenticated (environment authentication), when the version of the software installed in the mobile phone satisfies the environment condition set for the transaction amount. Only when the biometric authentication and the environment authentication are both successful, the user is authorized to use the mobile phone to carry out the electronic commerce.

Patent Document 1: Japanese Laid-open Patent Publication No. 2004-157790

### DISCLOSURE OF INVENTION

### PROBLEM TO BE SOLVED BY THE INVENTION

In the conventional biometric authentication, the authentication is only executed with a predetermined accuracy determined by a judging threshold set in advance. Because the authentication accuracy cannot be changed depending on the use environment of the information processing device, security is not always guaranteed. A similar problem also occurred, when different judging thresholds are set for each of a plurality of users, and the authentication is executed for each user with different accuracy.

For example, a user who is judged as the user him/herself by the biometric authentication when the user has logged in to the PC, may go through biometric authentication again, when the user tries to access specific information by starting the Web browser installed in the PC. However, the judgment can only be made with the authentication accuracy the same as that at the login, regardless of whether open information is accessed, or whether confidential information is accessed. Accordingly, in the conventional biometric authentication, security is not always guaranteed, because the setting of judging threshold cannot be changed depending on the use environment, e.g., when confidential information is about to be accessed, to perform more accurate authentication.

The biometric authentication may also be performed when a storage medium such as a universal serial bus (USB) memory is connected to the PC. However, the judgment can only be made with the authentication accuracy the same as that at the login, regardless of whether open information is copied and taken out, or whether confidential information is copied and taken out. Accordingly, in the above-described conventional biometric authentication, security is not always guaranteed, because the setting of judging threshold cannot be changed depending on the use environment, e.g., when confidential information is about to be taken out, to perform more accurate authentication.

In the above-described conventional biometric authentication, it is possible to ensure security by reducing a rate at which someone other than the authorized person is falsely accepted (false acceptance rate (FAR)). However, by doing so, a rate at which the authorized person is rejected as a different person (false rejection rate (FRR)) is increased, thereby reducing user convenience. In other words, if a judging threshold is set so that highly accurate biometric authentication is performed on a user who is likely to handle confidential information, even if the user is the user him/herself, the false rejection rate is increased when the user logs in to the PC. Accordingly, user convenience is reduced.

The judging threshold can be set so as to reduce the false rejection rate, and thereby to improve the user convenience. However, this also increases the false acceptance rate, and security is not guaranteed.

Thus, in the above-described conventional biometric authentication, it is difficult to balance user convenience with use-environment-adjusted security.

It has been described that it is difficult to balance user convenience with security, when the biometric authentication is performed in the information processing device such as a PC. However, a similar problem occurs, when the biometric authentication is performed in household electric appliances such as televisions (TVs) and digital versatile disk (DVD) players, as an information processing device connected to a communication network such as the Internet. In other words, depending on the content to be viewed, the use of the household electric appliance needs to be controlled for each individual. However, in the conventional biometric authentication, the determination is made by the judging threshold set in advance, and it is not possible to realize situation-depending authentication accuracy. Accordingly, it is difficult to balance user convenience with use-environment-adjusted security.

The present invention has been made to solve the issues of the conventional technologies, and intended to provide a user authentication judging device, a user authentication judging system, a user authentication judging program, and a user authentication judging method that can balance user convenience with use-environment-adjusted security.

### MEANS FOR SOLVING PROBLEM

To solve the problems as described above and to achieve an object, the present invention is a user authentication judging device that, when similarity calculated by verifying living body information received from an applicant of an information processing device with registered living body information that is living body information on a person registered as a user of the information processing device in advance is equal to or more than a judging threshold set in advance, determines to authenticate the applicant as the user, the user authentication judging device includes: a proper environment information memory unit that stores therein proper environment information that is information on an environment considered appropriate for a use environment of the information processing device; a proper environment judging threshold memory unit that stores therein a proper environment judging threshold that is the judging threshold set for each piece of the proper environment information stored in the proper environment information memory unit; a changed environment information collecting unit that detects a change in the use environment of the information processing device and collects changed environment information that is information on a changed use environment; an environment authentication judging unit that, when the changed environment information collected by the changed environment information collecting unit matches with any piece of the proper environment information stored in the proper environment information memory unit, determines to authenticate the changed environment information, and when the changed environment information collected by the changed environment information collecting unit does not match with any piece of the proper environment information stored in the proper environment information memory unit, determines not to authenticate the changed environment information; an authentication controlling unit that, when the environment authentication judging unit authenticates the changed environment information, controls authentication judgment by instructing reception of living body information from the applicant, and by instructing setting of a proper environment judging threshold corresponding to the proper environment information matched with the changed environment information, among the proper environment judging threshold stored in the proper environment judging threshold memory unit, as an object to be compared with the similarity; and a verification authenticating unit that, upon receiving the living body information from the applicant, performs authentication judgment and verification of the living body information received from the applicant with the registered living body information, by using the proper environment judging threshold that the authentication controlling unit instructs to set as the object to be compared with the similarity.

Further, in the above-described invention, the authentication controlling unit controls authentication judgment to authorize a use of the information processing device only when the verification authenticating unit determines to authenticate the applicant as the user.

Further, in the above-described invention, the user is present in plurality, and the user authentication judging device further includes a user information memory unit that stores therein user information that is personal information on each of the plurality of users, and the authentication controlling unit instructs the verification authenticating unit to further refer to the user information stored in the user information memory unit, while the verification authenticating unit performs authentication judgment and verification of the living body information received from the applicant with the registered living body information.

Further, in the above-described invention, the user information memory unit stores therein user group information that is information on each group to which each user belongs, and the authentication controlling unit instructs the verification authenticating unit to further refer to the user group information stored in the user information memory unit, while the verification authenticating unit performs authentication judgment and verification of the living body information received from the applicant with the registered living body information.

Further, the present invention is a user authentication judging system that includes a user authentication judging device and an environment authenticating server, and that, when similarity calculated by verifying living body information received from an applicant of an information processing device with registered living body information that is living body information on a person registered as a user of the information processing device in advance is equal to or more than a judging threshold set in advance, determines to authenticate the applicant as the user. The user authentication judging device includes a proper environment judging threshold memory unit that stores therein a proper environment judging threshold that is the judging threshold set for each piece of proper environment information that is information on an environment considered appropriate for a use environment of the information processing device, a changed environment information collecting unit that detects a change in the use environment of the information processing device and collects changed environment information that is information on a changed use environment, an environment information notifying unit that notifies the environment authenticating server of the changed environment information collected by the changed environment information collecting unit, an authentication controlling unit that, when a judgment result notified from the environment authenticating server authenticates the changed environment information, controls authentication judgment by instructing reception of living body information from the applicant, and by instructing setting of a proper environment judging threshold corresponding to the proper environment information matched with the changed environment information, among the proper environment judging threshold stored in the proper environment judging threshold memory unit, as an object to be compared with the similarity, and a verification authenticating unit that, upon receiving the living body information from the applicant, performs authentication judgment and verification of the living body information received from the applicant with the registered living body information, by using the proper environment judging threshold that the authentication controlling unit instructs to set as the object to be compared with the similarity. The environment authenticating server includes a proper environment information memory unit that stores therein the proper environment information, an environment authentication judging unit that, when the changed environment information notified from the user authentication judging device by the environment information notifying unit matches with any piece of the proper environment information stored in the proper environment information memory unit, determines to authenticate the changed environment information, and when the changed environment information notified from the user authentication judging device does not match with any piece of the proper environment information stored in the proper environment information memory unit, determines not to authenticate the changed environment information, and a judgment result notifying unit that notifies the user authentication judging device of a judgment result of the changed environment information made by the environment authentication judging unit.

Further, the present invention is a user authentication judging system that includes a user authentication judging device, an environment authenticating server, and a living body authenticating server, and that, when similarity calculated by verifying living body information received from an applicant of an information processing device with registered living body information that is living body information on a person registered as a user of the information processing device in advance is equal to or more than a judging threshold set in advance, determines to authenticate the applicant as the user. The user authentication judging device includes a changed environment information collecting unit that detects a change in a use environment of the information processing device and collects changed environment information that is information on a changed use environment, an environment information notifying unit that notifies the environment authenticating server of the changed environment information collected by the changed environment information collecting unit, an authentication controlling unit that controls authentication judgment by instructing reception of living body information from the applicant, when a judgment result notified from the environment authenticating server authenticates the changed environment information, and an authentication data notifying unit that, upon receiving the living body information from the applicant, transmits the living body information thus received and the changed environment information thus authenticated to the living body authenticating server. The environment authenticating server includes a proper environment information memory unit that stores therein proper environment information that is information on an environment considered appropriate for the use environment of the information processing device, an environment authentication judging unit that, when the changed environment information notified from the user authentication judging device by the environment information notifying unit matches with any piece of the proper environment information stored in the proper environment information memory unit, determines to authenticate the changed environment information, and when the changed environment information notified from the user authentication judging device does not match with any piece of the proper environment information stored in the proper environment information memory unit, determines not to authenticate the changed environment information, and a judgment result notifying unit that notifies the user authentication judging device of a judgment result of the changed environment information made by the environment authentication judging unit. The living body authenticating server includes a registered living body information memory unit that stores therein the registered living body information, a proper environment judging threshold memory unit that stores therein a proper environment judging threshold that is the judging threshold set for each piece of the proper environment information, a verification authenticating unit that performs verification and authentication judgment by comparing the similarity calculated by verifying the living body information of the applicant notified from the user authentication judging device by the authentication data notifying unit with the registered living body information stored in the registered living body information memory unit, and a proper environment judging threshold corresponding to the proper environment information matched with the authenticated changed environment information notified from the user authentication judging device by the authentication data notifying unit, among the proper environment judging threshold stored in the proper environment judging threshold memory unit, and an authentication judgment result notifying unit that notifies the user authentication judging device of a result of the authentication judgment obtained by the verification authenticating unit.

Further, the present invention is a user authentication judging system that includes a user authentication judging device, an environment authenticating server, and a living body authenticating server, and that, when similarity calculated by verifying living body information received from an applicant of an information processing device with registered living body information that is living body information on a person registered as a user of the information processing device in advance is equal to or more than a judging threshold set in advance, determines to authenticate the applicant as the user. The user authentication judging device includes a proper environment judging threshold memory unit that stores therein a proper environment judging threshold that is the judging threshold set for each piece of proper environment information that is information on an environment considered appropriate for a use environment of the information processing device, a changed environment information collecting unit that detects a change in the use environment of the information processing device and collects changed environment information that is information on a changed use environment, an environment information notifying unit that notifies the environment authenticating server of the changed environment information collected by the changed environment information collecting unit, an authentication controlling unit that, when a judgment result notified from the environment authenticating server authenticates the changed environment information, controls authentication judgment by instructing reception of living body information from the applicant, and by instructing setting of a proper environment judging threshold corresponding to the proper environment information matched with the changed environment information, among the proper environment judging threshold stored in the proper environment judging threshold memory unit, as an object to be compared with the similarity, and an authentication data notifying unit that, upon receiving the living body information from the applicant, transmits received living body information and the proper environment judging threshold that the authentication controlling unit instructs to set as the object to be compared with the similarity to the living body authenticating server. The environment authenticating server includes a proper environment information memory unit that stores therein the proper environment information, an environment authentication judging unit that, when the changed environment information notified from the user authentication judging device by the environment information notifying unit matches with any piece of the proper environment information stored in the proper environment information memory unit, determines to authenticate the changed environment information, and when the changed environment information notified from the user authentication judging device does not match with any piece of the proper environment information stored in the proper environment information memory unit, determines not to authenticate the changed environment information, and a judgment result notifying unit that notifies the user authentication judging device of a judgment result of the changed environment information made by the environment authentication judging unit. The living body authenticating server includes a registered living body information memory unit that stores therein the registered living body information, a verification authenticating unit that performs authentication judgment by comparing the similarity calculated by verifying the registered living body information stored in the registered living body information memory unit with the living body information of the applicant notified from the user authentication judging device by the authentication data notifying unit, and the proper environment judging threshold notified from the user authentication judging device by the authentication data notifying unit, and an authentication judgment result notifying unit that notifies the user authentication judging device of a result of the authentication judgment obtained by the verification authenticating unit.

Further, in the above-described invention, the authentication controlling unit controls authentication judgment to authorize a use of the information processing device only when the verification authenticating unit determines to authenticate the applicant as the user.

Further, in the above-described invention, the user is present in plurality, and the user authentication judging device or the living body authenticating server further includes a user information memory unit that stores therein user information that is personal information on each of the plurality of users, and the authentication controlling unit instructs the verification authenticating unit to further refer to the user information stored in the user information memory unit in the user authentication judging device or the living body authenticating server, while the verification authenticating unit performs authentication judgment and verification of the living body information received from the applicant with the registered living body information.

Further, in the above-described invention, the user information memory unit stores therein user group information that is information on each group to which each user belongs, and the authentication controlling unit instructs the verification authenticating unit to further refer to the user group information stored in the user information memory unit in the user authentication judging device or the living body authenticating server, while the verification authenticating unit performs authentication judgment and verification of the living body information received from the applicant with the registered living body information.

Further, the present invention is a user authentication judging program that causes a computer to execute a user authentication judging method for determining to authenticate an applicant as a user, when similarity calculated by verifying living body information received from an applicant of an information processing device with registered living body information that is living body information on a person registered as a user of the information processing device in advance is equal to or more than a judging threshold set in advance. The user authentication judging program causes the computer to execute: a proper environment information storing procedure of storing proper environment information that is information on an environment considered appropriate for a use environment of the information processing device in a first memory unit; a proper environment judging threshold storing procedure of storing a proper environment judging threshold that is the judging threshold set for each piece of the proper environment information stored in the first memory unit in a second memory unit; a changed environment information collecting procedure of collecting changed environment information that is information on a changed use environment, while detecting a change in the use environment of the information processing device; an environment authentication judging procedure of determining to authenticate the changed environment information when the changed environment information collected at the changed environment information collecting procedure matches with any piece of the proper environment information stored in the first memory unit, and determining not to authenticate the changed environment information when the changed environment information collected at the changed environment information collecting procedure does not match with any piece of the proper environment information stored in the first memory unit; an authentication controlling procedure of controlling authentication, when the changed environment information is authenticated at the environment authentication judging procedure, by instructing reception of living body information from the applicant, and by instructing setting of a proper environment judging threshold corresponding to the proper environment information matched with the changed environment information, among the proper environment judging threshold stored in the second memory unit, as an object to be compared with the similarity; and a verification authenticating procedure of performing authentication judgment and verification of the living body information received from the applicant with the registered living body information, upon receiving the living body information from the applicant, by using the proper environment judging threshold set under instruction as the object to be compared with the similarity at the authentication controlling procedure.

Further, the present invention is a user authentication judging method for determining to authenticate an applicant as a user, when similarity calculated by verifying living body information received from an applicant of an information processing device with registered living body information that is living body information on a person registered as a user of the information processing device in advance is equal to or more than a judging threshold set in advance. The user authentication judging method includes: a proper environment information storing step of storing proper environment information that is information on an environment considered appropriate for a use environment of the information processing device in a first memory unit; a proper environment judging threshold storing step of storing a proper environment judging threshold that is the judging threshold set for each piece of the proper environment information stored in the first memory unit in a second memory unit; a changed environment information collecting step of collecting changed environment information that is information on a changed use environment, while detecting a change in the use environment of the information processing device; an environment authentication judging step of determining to authenticate the changed environment information when the changed environment information collected at the changed environment information collecting step matches with any piece of the proper environment information stored in the first memory unit, and determining not to authenticate the changed environment information when the changed environment information collected at the changed environment information collecting step does not match with any piece of the proper environment information stored in the first memory unit; an authentication controlling step of controlling authentication, when the changed environment information is authenticated at the environment authentication judging step, by instructing reception of living body information from the applicant, and by instructing setting of a proper environment judging threshold corresponding to the proper environment information matched with the changed environment information, among the proper environment judging threshold stored in the second memory unit, as an object to be compared with the similarity; and a verification authenticating step of performing authentication judgment and verification of the living body information received from the applicant with the registered living body information, upon receiving the living body information from the applicant, by using the proper environment judging threshold set under instruction as the object to be compared with the similarity at the authentication controlling step.

### EFFECT OF THE INVENTION

With the present invention, it is possible to balance user convenience with use-environment-adjusted security. This is possible, for example, by setting a judging threshold so that the false rejection rate is low when a user logs in to a PC, and setting a judging threshold so that the false acceptance rate is low when a user accesses confidential information through a Web browser from the PC. Accordingly, personal authentication can be executed with optimum authentication accuracy depending on the use environment of the PC.

With the present invention, when the PC is logged in, for example, it is possible to quickly authenticate and judge an applicant as the user him/herself, and authorize the applicant to use the PC. Alternatively, when a USB memory is connected to the PC, even if the applicant who has connected the USB memory to the PC is a user authorized to take out confidential information, it is possible to prevent the applicant from using the PC by connecting the USB memory, until the applicant is authenticated as the user him/herself with high accuracy. Accordingly, it is possible to balance user convenience with use-environment-adjusted security.

With the present invention, for example, if a thirteen-year-old child A who is authorized to use a DVD player at home by biometric authentication, when the DVD player is turned on, inserts a DVD with a movie Rated 15 whose rating is determined by the Code of Ethics, the user authentication judging device can prevent the child A from viewing the movie Rated 15 recorded on the DVD. This is possible if the "Rating: R15" recorded on the DVD is collected as environment information when the DVD is inserted, and the user authentication judging device can refer to "age: 13" that is personal information on child A during authentication judgment, after determining that the applicant is child A him/herself. Accordingly, it is possible to balance parent/guardian convenience in the educational environment with security of children in the educational environment.

With the present invention, for example, if Mr./Ms B who belongs to a "sales department" authorized to use a business server installed in a company by biometric authentication, when the business server is logged in, tries to access a research and development department's database to which only users who belongs to a "research and development department" are authorized to refer to, it is possible to prevent Mr./Ms B from referring to the data stored in the research and development department's database. This is possible if "access the research and development department's database" is collected as environment information when MR./Ms B tries to access, and the user authentication judging device can refer to the "department: sales department" that is group information of Mr./Ms B during authentication judgment, after determining that the applicant is Mr./Ms B him/herself. Accordingly, it is possible to balance convenience of a system administrator with use-environment-adjusted security of information important to the company organization.

With the present invention, the system administrator can integrally manage and control the use environment of the information processing device used by the employees. Accordingly, it is possible to balance convenience of the company's system administrator with use-environment-adjusted security of information important to the company organization.

With the present invention, the system administrator can also integrally manage and control the use environment of the information processing device used by the employees. Accordingly, it is possible to prevent dangers, such as personal information being stolen and altered, by integrally managing and controlling the registered living body information that is personal information of the user. Consequently, it is possible to balance convenience of the system administrator with use-environment-adjusted security of information important to the company organization

### BRIEF DESCRIPTION OF DRAWINGS

FIG. 1 is a schematic for explaining an outline and characteristics of a user authentication judging device according to a first embodiment.
FIG. 2 is a schematic of the user authentication judging device according to the first embodiment.
FIG. 3 is a schematic for explaining a proper environment information memory unit according to the first embodiment.
FIG. 4 is a schematic for explaining a proper environment judging threshold memory unit according to the first embodiment.
FIG. 5 is a schematic for explaining a process performed by the user authentication judging device according to the first embodiment.
FIG. 6 is a schematic for explaining an outline and characteristics of a user authentication judging device according to a second embodiment.
FIG. 7 is a schematic of the user authentication judging device according to the second embodiment.
FIG. 8 is a schematic for explaining a proper environment information memory unit according to the second embodiment.
FIG. 9 is a schematic for explaining a proper environment judging threshold memory unit according to the second embodiment.
FIG. 10 is a schematic for explaining a user information memory unit according to the second embodiment.
FIG. 11 is a schematic for explaining a process performed by the user authentication judging device according to the second embodiment.
FIG. 12-1 is a schematic for explaining an outline and characteristics of a user authentication judging system according to a third embodiment.
FIG. 12-2 is a schematic for explaining an outline and characteristics of the user authentication judging system according to the third embodiment.
FIG. 13 is a schematic of a user authentication judging device according to the third embodiment.
FIG. 14 is a schematic for explaining a proper environment judging threshold memory unit according to the third embodiment.
FIG. 15 is a schematic for explaining a user information memory unit according to the third embodiment.
FIG. 16 is a schematic of an environment authenticating server according to the third embodiment.
FIG. 17 is a schematic for explaining a proper environment information memory unit according to the third embodiment.
FIG. 18 is a schematic for explaining a process performed by the user authentication judging device according to the third embodiment.
FIG. 19 is a schematic for explaining a process performed by the environment authenticating server according to the third embodiment.
FIG. 20-1 is a schematic for explaining an outline and characteristics of a user authentication judging system according to a fourth embodiment.
FIG. 20-2 is a schematic for explaining an outline and characteristics of the user authentication judging system according to the fourth embodiment.
FIG. 21 is a schematic of a user authentication judging device according to the fourth embodiment.
FIG. 22 is a schematic of a living body authenticating server according to the fourth embodiment.
FIG. 23 is a schematic for explaining a process performed by the user authentication judging device according to the fourth embodiment.
FIG. 24 is a schematic for explaining a process performed by the living body authenticating server according to the fourth embodiment.
FIG. 25 is a schematic for explaining a user authentication judging system according to a fifth embodiment.
FIG. 26 is a schematic of a computer that executes a user authentication judging program according to the first embodiment.
FIG. 27 is a schematic for explaining a conventional technology.

### EXPLANATIONS OF LETTERS OR NUMERALS

- 10: User authentication judging device
- 11: Input unit
- 12: Output unit
- 13: Input/output control I/F unit
- 14: Memory unit
- 14a: Changed environment information memory unit
- 14b: Proper environment information memory unit
- 14c: Environment authentication result memory unit
- 14d: Proper environment judging threshold memory unit
- 14e: Registered living body information memory unit
- 15: Processing unit
- 15a: Changed environment information collecting unit
- 15b: Environment authentication judging unit
- 15c: Authentication controlling unit
- 15d: Verification authenticating unit

### BEST MODE(S) FOR CARRYING OUT THE INVENTION

Exemplary embodiments of a user authentication judging device, a user authentication judging system, a user authentication judging program, and a user authentication judging method according to the present invention will be described in detail with reference to the accompanying drawings.

### First Embodiment

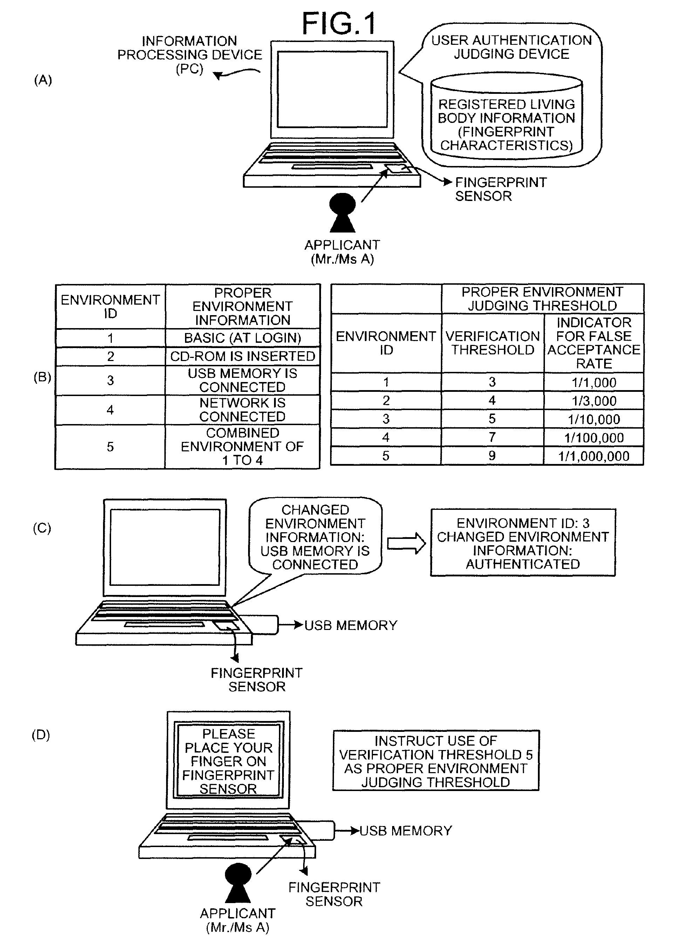

Outline and Characteristics of User Authentication Judging Device according to First Embodiment
With reference to FIG. 1, main characteristic of a user authentication judging device according to a first embodiment will be specifically described. FIG. 1 is a schematic for explaining an outline and characteristics of the user authentication judging device according to the first embodiment.

The outline of the user authentication judging device according to the first embodiment is to judge an applicant as an authenticated user, when the similarity calculated by verifying living body information received from an applicant of an information processing device with registered living body information that is living body information on a person registered as a user of the information processing device in advance is equal to or more than a judging threshold set in advance. For example, as illustrated in FIG. 1(A), the user authentication judging device according to the first embodiment is incorporated into a personal computer (PC) as an information processing device, and receives a fingerprint image from an applicant (Mr./Ms A) of the PC, through a fingerprint sensor mounted on the PC. Fingerprint characteristics are extracted from the received fingerprint image as verification data. The similarity is then calculated by verifying the extracted fingerprint characteristics with the fingerprint characteristics stored in the PC in advance as registered living body information, and if the calculated similarity is equal to or more than a judging threshold set in the PC in advance, the user authentication judging device judges the applicant (Mr./Ms A) as an authenticated user.

The main characteristic of the present invention is to balance user convenience with use-environment-adjusted security. The main characteristic will be described in a simple manner. The user authentication judging device according to the first embodiment stores therein proper environment information, that is information on an environment considered appropriate as an environment of an information processing device (PC). For example, as illustrated in the left table in FIG. 1(B), the user authentication judging device stores therein proper environment information of the PC, e.g., the PC is logged in, a CD-ROM is inserted, a USB memory is connected, a network is connected, or a combined environment of these, in association with "environment IDs: 1 to 5".

The user authentication judging device according to the first embodiment stores therein a proper environment judging threshold that is a judging threshold set for each piece of the proper environment information. For example, as illustrated in the right table in FIG. 1(B), a proper environment judging threshold is set for each of the "environment IDs: 1 to 5". For example, the user authentication judging device sets and stores therein the "verification threshold: 3" adjusted so that an "indicator for the false acceptance rate is one thousandth", as the proper environment threshold of the "environment ID: 1" that indicates the "basic (at login)". The user authentication judging device also sets and stores therein the "verification threshold: 5" adjusted so that an "indicator for the false acceptance rate is one ten-thousandth", as the proper environment threshold of the "environment ID: 3" that indicates the "USB memory is connected".

The user authentication judging device according to the first embodiment collects changed environment information that is information on the changed use environment, while detecting that an applicant has changed the use environment of the information processing device (PC). For example, as illustrated in FIG. 1(C), the user authentication judging device collects the "changed environment information: USB memory is connected", when detecting that a USB memory is connected to the PC.

If the collected changed environment information is matched with any piece of the proper environment information, the user authentication judging device according to the first embodiment determines to authenticate the changed environment information. If the collected changed environment information does not match with any piece of the proper environment information, the user authentication judging device does not determine to authenticate the changed environment information. For example, as illustrated in FIG. 1(C), if the "changed environment information: USB memory is connected" is matched with the "environment ID: 3" stored therein as proper environment information, the user authentication judging device according to the first embodiment determines to authenticate the changed environment information. If the changed environment information does not match with any piece of the proper environment information, the user authentication judging device does not determine to authenticate the use environment of the PC about to be changed by the applicant. For example, the user authentication judging device may prohibit the applicant from using the PC and the like from then on.

If the changed environment information is authenticated, the user authentication judging device according to the first embodiment controls authentication judgment by instructing to receive living body information from the applicant, and by instructing to set a proper environment judging threshold corresponding to the proper environment information matched with the changed environment information, among the proper environment judging thresholds, as an object to be compared with the similarity. In other words, as illustrated in FIG. 1(C), if the "changed environment information: USB memory is connected" is authenticated as the "environment ID: 3", the user authentication judging device according to the first embodiment, as illustrated in FIG. 1(D), for example, instructs Mr./Ms A who wishes to use the PC by connecting a USB memory to provide a fingerprint image through a fingerprint sensor, by displaying "please place your finger on the fingerprint sensor" on a monitor of the PC. The user authentication judging device also controls authentication judgment by instructing to set the '"verification threshold: 5" adjusted so that an "indicator for the false acceptance rate is one ten-thousandth"' that is the proper environment judging threshold corresponding to the "environment ID: 3", among the proper environment judging thresholds, as an object to be compared with the similarity.

Upon receiving the living body information from the applicant, the user authentication judging device according to the first embodiment performs authentication judgment by verifying the living body information received from the applicant with the registered living body information, by using the proper environment judging threshold set under instruction as the object to be compared with the similarity. In other words, the user authentication judging device according to the first embodiment extracts fingerprint characteristics from the fingerprint image received from the applicant (Mr./Ms A) as verification data, and calculates the similarity by verifying the extracted fingerprint characteristics with the fingerprint characteristics stored in advance as registered living body information. If the calculated similarity is equal to or more than the proper environment judging threshold set as the "verification threshold: 5", the user authentication judging device judges the applicant (Mr./Ms A) as an authenticated user.

The user authentication judging device according to the first embodiment authorizes the applicant to use the information processing device (PC), only when the applicant is judged to be an authenticated user. For example, the user authentication judging device authorizes the applicant (Mr./Ms A) to connect a USB memory to the PC, only when Mr./Ms A is judged to be an authenticated user of the PC, by using the proper environment judging threshold set as the "verification threshold: 5".

In the present embodiment, a "1:N authentication" method in which only living body information is received from the applicant, and verification is performed based on the received living body information and the living body information registered in advance is described. However, the present invention is not limited thereto, and a "1:1 authentication" method in which an ID and living body information are received from the applicant, and verification is performed between living body information corresponding to the received ID in the living body information registered in advance with the received living body information may be executed.

In this manner, the user authentication judging device according to the first embodiment can execute personal authentication with optimum authentication accuracy depending on the use environment of the PC, for example, by setting a judging threshold, so that the false rejection rate is low when the PC is logged in, and setting a judging threshold, so that the false acceptance rate is low when a USB memory is connected to the PC and information is to be taken out. Accordingly, as the above-described main characteristic, it is possible to balance user convenience with use-environment-adjusted security.

### Configuration of User Authentication Judging Device according to First Embodiment

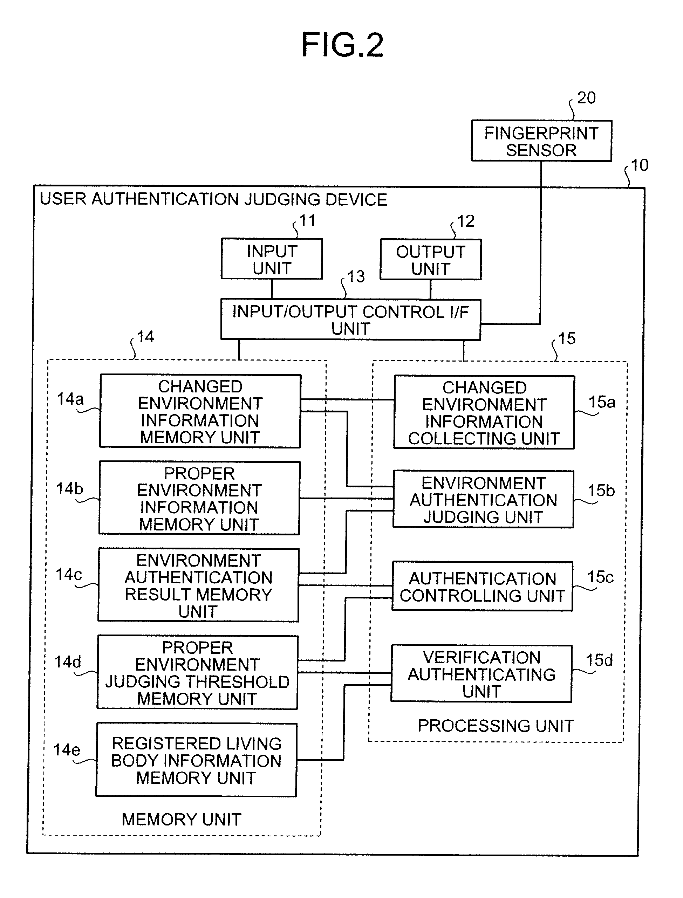

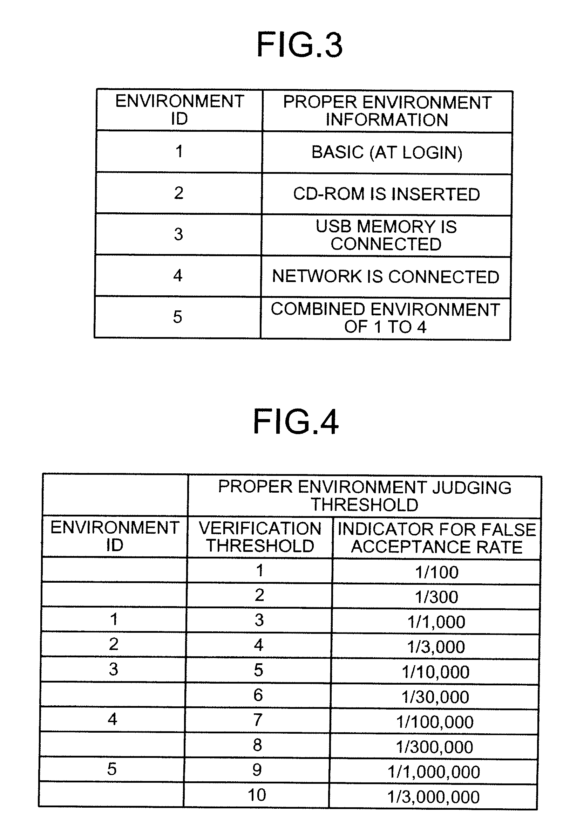

With reference to FIGS. 2 to 4, the user authentication device according to the first embodiment will now be described. FIG. 2 is a schematic of the user authentication judging device according to the first embodiment. FIG. 3 is a schematic for explaining a proper environment information memory unit according to the first embodiment. FIG. 4 is a schematic for explaining a proper environment judging threshold memory unit according to the first embodiment.

As illustrated in FIG. 2, a user authentication judging device 10 according to the first embodiment includes an input unit 11, an output unit 12, an input/output control interface (I/F) unit 13, a memory unit 14, and a processing unit 15. The user authentication judging device 10 is also connected to a fingerprint sensor 20. These are incorporated into a PC as an information processing device.

The fingerprint sensor 20 receives a fingerprint image from an applicant, and the received fingerprint image is transmitted to the processing unit 15, through the input/output control I/F unit 13, which will be described later.

The input unit 11 receives various types of information, and includes a keyboard, a mouse, and the like. As those closely related to the present invention, the input unit 11, for example, receives "proper environment information" and a "proper environment judging threshold", from the keyboard.

The output unit 12 outputs various types of information, and includes a monitor and a speaker. As those closely related to the present invention, for example, the output unit 12 displays a message on a screen to prompt an applicant to provide living body information by the instruction of an authentication controlling unit 15c, which will be described later, and displays the authentication judgment result obtained by a verification authenticating unit 15d, which will be described later, on a screen of a monitor.

The input/output control I/F unit 13 controls data transmission between the fingerprint sensor 20, the input unit 11 and the output unit 12, and the memory unit 14 and the processing unit 15.

The memory unit 14 stores therein data used for various types of processing performed by the processing unit 15, and various processing results obtained by the processing unit 15. As those closely related to the present invention, as illustrated in FIG. 2, the memory unit 14 includes a changed environment information memory unit 14a, a proper environment information memory unit 14b, an environment authentication result memory unit 14c, a proper environment judging threshold memory unit 14d, and a registered living body information memory unit 14e. The proper environment information memory unit 14b corresponds to a "proper environment information memory unit" disclosed in the appended claims, and the proper environment judging threshold memory unit 14d similarly corresponds to a "proper environment judging threshold memory unit".

The proper environment information memory unit 14b stores therein proper environment information that is information on an environment considered appropriate for the use environment of an information processing device (PC). For example, as illustrated in FIG. 3, the proper environment information memory unit 14b stores therein proper environment information of a PC, e.g., the PC is logged in, a CD-ROM is inserted, a USB memory is connected, a network is connected, or the combined environment of these, in association with "environment IDs: 1 to 5".

The proper environment judging threshold memory unit 14d stores therein a proper environment judging threshold that is a judging threshold set for each piece of the proper environment information, stored in the proper environment information memory unit 14b. For example, as illustrated in FIG. 4, the proper environment judging threshold memory unit 14d stores therein a proper environment judging threshold for each of the "environment IDs: 1 to 5". For example, the proper environment judging threshold memory unit 14d sets and stores therein the "verification threshold: 3" adjusted so that an "indicator for the false acceptance rate is one thousandth", as the proper environment judging threshold of the "environment ID: 1" that indicates the "basic (at login)". The proper environment judging threshold memory unit 14d also sets and stores therein the "verification threshold: 5" adjusted so that an "indicator for the false acceptance rate is one ten-thousandth", as the proper environment judging threshold of the "environment ID: 3" that indicates the "USB memory is connected". In FIG. 4, pieces of information on proper environment judging thresholds in which an "environment ID" is not registered, e.g., the "verification threshold: 2" adjusted so that an "indicator for the false acceptance rate is one three-hundredth" are also illustrated.

The registered living body information memory unit 14e stores therein registered living body information that is living body information on a person registered as a user of the information processing device (PC) in advance. For example, the registered living body information memory unit 14e stores therein fingerprint characteristics extracted from a fingerprint image received from the user of the information processing device (PC).

The changed environment information memory unit 14a stores therein the result collected by a changed environment information collecting unit 15a, which will be described later, and the environment authentication result memory unit 14c stores therein the result judged by an environment authentication judging unit 15b, which will be described later. These units will be described later.

The processing unit 15 executes various types of processing based on data transmitted from the input/output control I/F unit 13. As those closely related to the present invention, as illustrated in FIG. 2, the processing unit 15 includes the changed environment information collecting unit 15a, the environment authentication judging unit 15b, the authentication controlling unit 15c, and the verification authenticating unit 15d. The changed environment information collecting unit 15a corresponds to a "changed environment information collecting unit" disclosed in the appended claims, the environment authentication judging unit 15b similarly corresponds to an "environment authentication judging unit", the authentication controlling unit 15c similarly corresponds to an "authentication controlling unit", and the verification authenticating unit 15d similarly corresponds to a "verification authenticating unit".

The changed environment information collecting unit 15a collects the changed environment information that is information on the changed use environment, while detecting that the applicant has changed the use environment of the information processing device (PC), and stores the result in the changed environment information memory unit 14a. For example, the changed environment information collecting unit 15a collects the "changed environment information: USB memory is connected", when detecting that the use environment of the PC is changed, e.g., when a USB memory is connected to the PC.

If the changed environment information stored in the changed environment information memory unit 14a matches with any piece of the proper environment information stored in the proper environment information memory unit 14b, the environment authentication judging unit 15b determines to authenticate the changed environment information. If the changed environment information stored in the changed environment information memory unit 14a does not match with any piece of the proper environment information stored in the proper environment information memory unit 14b, the environment authentication judging unit 15b does not determine to authenticate the changed environment information, and stores the judgment result in the environment authentication result memory unit 14c. For example, as illustrated in FIG. 3, if the "changed environment information: USB memory is connected" matches with the "environment ID: 3" stored as the proper environment information, the environment authentication judging unit 15b determines to authenticate the changed environment information.

If the judgment result indicating that the "changed environment information is authenticated" is stored in the environment authentication result memory unit 14c, the authentication controlling unit 15c controls authentication judgment by instructing reception of living body information from the applicant, and by instructing setting of a proper environment judging threshold corresponding to the proper environment information matched with the changed environment information, among the proper environment judging thresholds stored in the proper environment judging threshold memory unit 14d, as an object to be compared with the similarity. In other words, if the "changed environment information: USB memory is connected" is authenticated as the "environment ID: 3", the authentication controlling unit 15c, for example, instructs an applicant who wishes to use the PC by connecting a USB memory to provide a fingerprint image through the fingerprint sensor 20, by displaying "please place your finger on the fingerprint sensor" on a monitor of the output unit 12. The authentication controlling unit 15c also controls authentication judgment by instructing setting of the "verification threshold: 5" (see FIG. 4) adjusted so that an "indicator for the false acceptance rate is one ten-thousandth" that is the proper environment judging threshold corresponding to the "environment ID: 3", among the proper environment judging thresholds, as an object to be compared with the similarity.

Upon receiving the living body information of the applicant from the fingerprint sensor 20, the verification authenticating unit 15d performs authentication judgment by verifying the living body information received from the applicant with the registered living body information stored in the registered living body information memory unit 14e, by using the proper environment judging threshold that the authentication controlling unit 15c instructs to set as the object to be compared with the similarity. More specifically, the verification authenticating unit 15d extracts fingerprint characteristics from the received fingerprint image of the applicant as verification data, and calculates the similarity by verifying the extracted fingerprint characteristics with the fingerprint characteristics stored in the registered living body information memory unit 14e as registered living body information. If the calculated similarity is equal to or more than the proper environment judging threshold set as the "verification threshold: 5", the verification authenticating unit 15d judges the applicant as an authenticated user.

The authentication controlling unit 15c authorizes the applicant to use the information processing device (PC), only when the applicant is judged to be an authenticated user. For example, the authentication controlling unit 15c authorizes the applicant to connect a USB memory to the PC, only when the applicant is judged to be an authenticated user of the PC, by using the proper environment judging threshold set as the "verification threshold: 5".

### Procedure of Process Performed by User Authentication Judging Device according to First Embodiment

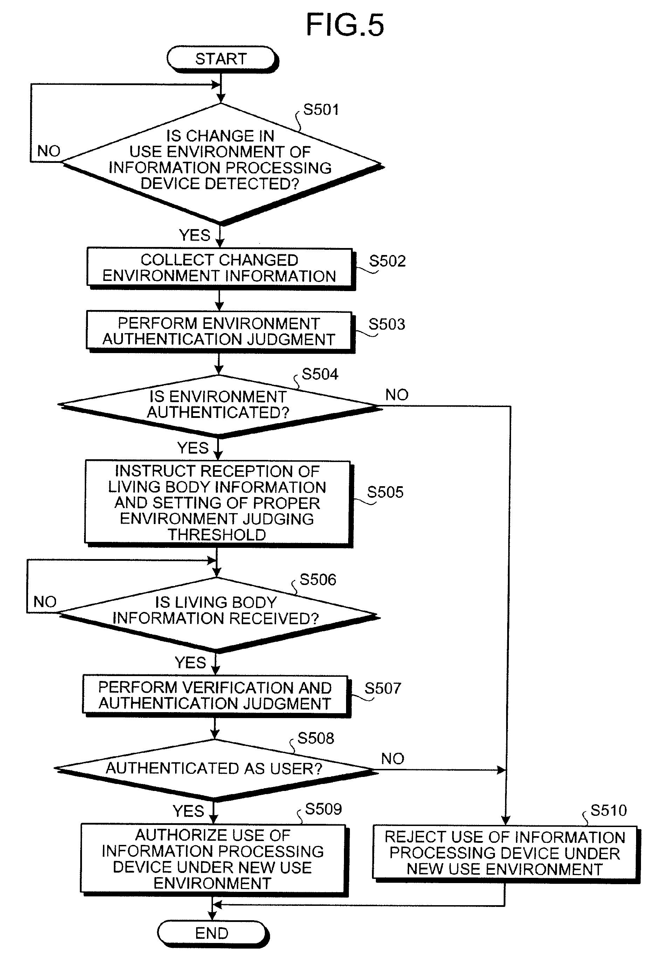

A process performed by the user authentication judging device 10 according to the first embodiment will now be described with reference to FIG. 5. FIG. 5 is a schematic for explaining a process performed by the user authentication judging device according to the first embodiment.

Upon detecting the change in the use environment of the PC as an information processing device (Yes at Step S501), the changed environment information collecting unit 15a in the user authentication judging device 10 according to the first embodiment collects changed environment information that is information on the changed use environment (Step 5502). For example, when the PC is started and a login screen is displayed, the changed environment information collecting unit 15a collects the "changed environment information: basic (at login)", and when a USB memory is connected to the PC, the changed environment information collecting unit 15a collects the "changed environment information: USB memory is connected".

The environment authentication judging unit 15b performs authentication judgment by comparing the changed environment information collected by the changed environment information collecting unit 15a with the proper environment information stored in the proper environment information memory unit 14b (Step 5503). In other words, if the changed environment information collected by the changed environment information collecting unit 15a matches with any piece of the proper environment information stored in the proper environment information memory unit 14b, the environment authentication judging unit 15b determines to authenticate the changed environment information. If the changed environment information collected by the changed environment information collecting unit 15a does not match with any piece of the proper environment information stored in the proper environment information memory unit 14b, the environment authentication judging unit 15b does not determine to authenticate the changed environment information, and stores the judgment result in the environment authentication result memory unit 14c. For example, if the "changed environment information: basic (at login)" is matched with the "environment ID: 1" illustrated in FIG. 3, the environment authentication judging unit 15b determines to authenticate the changed environment information. If the "changed environment information: USB memory is connected" is matched with the "environment ID: 3" illustrated in FIG. 3, the environment authentication judging unit 15b determines to authenticate the changed environment information.

If the changed environment information is not authenticated as a new use environment (NO at Step S504), the authentication controlling unit 15c prevents the applicant from using the information processing device (PC) under the new use environment (Step S510), and finishes the process.

Alternatively, if the changed environment information is authenticated as a new use environment (YES at Step S504), the authentication controlling unit 15c controls authentication judgment by instructing reception of living body information from the applicant, and by instructing setting of a proper environment judging threshold corresponding to the proper environment information matched with the changed environment information, among the proper environment judging thresholds stored in the proper environment judging threshold memory unit 14d, as an object to be compared with the similarity (Step S505). In other words, when the "changed environment information: basic (at login)" is authenticated as the "environment ID: 1", or when the "changed environment information: USB memory is connected" is authenticated as the "environment ID: 3", the authentication controlling unit 15c, for example, displays "please place your finger on the fingerprint sensor" on the monitor of the output unit 12. Accordingly, the authentication controlling unit 15c instructs an applicant who wishes to log in to the PC or to connect a USB memory to provide a fingerprint image through the fingerprint sensor 20. The authentication controlling unit 15c also controls authentication judgment by instructing setting of the '"verification threshold: 3" adjusted so that an "indicator for the false acceptance rate is one thousandt.h"' that is the proper environment judging threshold corresponding to the "environment ID: 1", or the '"verification threshold: 5" adjusted so that an "indicator for the false acceptance rate is one ten-thousandth"' that is the proper environment judging threshold corresponding to the "environment ID: 3", among the proper environment judging thresholds, as an object to be compared with the similarity.

Upon receiving the living body information of the applicant from the fingerprint sensor 20 (YES at Step S506), the verification authenticating unit 15d performs authentication judgment by verifying the living body information received from the applicant with the registered living body information stored in the registered living body information memory unit 14e, by using the proper environment judging threshold that the authentication controlling unit 15c instructs to set as the object to be compared with the similarity (Step S507). More specifically, the verification authenticating unit 15d extracts fingerprint characteristics from the received fingerprint image of the applicant as verification data, and calculates the similarity by verifying the extracted fingerprint characteristics with the fingerprint characteristics stored in the registered living body information memory unit 14e as registered living body information. If the calculated similarity is equal to or more than the proper environment judging threshold being set, the verification authenticating unit 15d judges the applicant as an authenticated user. For example, when the PC is logged in, if the calculated similarity is equal to or more than the proper environment judging threshold set as the "verification threshold: 3", the verification authenticating unit 15d judges the applicant as an authenticated user. When a USB is connected, if the calculated similarity is equal to or more than the proper environment judging threshold set as the "verification threshold: 5", the verification authenticating unit 15d judges the applicant as an authenticated user.

If the verification authenticating unit 15d judges the applicant as an authenticated user (YES at Step S508), the authentication controlling unit 15c authorizes the applicant to use the information processing device (PC) under the new use environment (Step S509), and finishes the process.

Alternatively, if the verification authenticating unit 15d does not judge the applicant as an authenticated user (NO at Step S508), the authentication controlling unit 15c prevents the applicant from using the information processing device (PC) under the new use environment (Step S510), and finishes the process.

### Advantages of First Embodiment

As described above, according to the first embodiment, the user authentication judging device stores therein proper environment information that is information considered appropriate for the use environment of the information processing device (PC), and stores therein a proper environment judging threshold that is a judging threshold set for each piece of the proper environment information. The user authentication judging device collects the changed environment information that is information on the changed use environment, while detecting the change in the use environment of the information processing device (PC). If the collected changed environment information matches with any piece of the proper environment information, the user authentication judging device determines to authenticate the changed environment information, and if the collected changed environment information does not match with any piece of the proper environment information, the user authentication judging device does not determine to authenticate the changed environment information. If the changed environment information is authenticated, the user authentication judging device instructs reception of living body information from the applicant, and instructs setting of a proper environment judging threshold corresponding to the proper environment information matched with the changed environment information, among the proper environment judging thresholds, as an object to be compared with the similarity. Upon receiving the living body information from the applicant, the user authentication judging device performs authentication judgment by verifying the living body information received from the applicant with the registered living body information, by using the proper environment judging threshold set under instruction as the object to be compared with the similarity. Accordingly, personal authentication can be executed with optimum authentication accuracy depending on the use environment of the PC, for example, by setting a judging threshold so that the false rejection rate is low when the PC is logged in, and setting a judging threshold so that the false acceptance rate is low when a USB memory is connected to the PC and information is to be taken out. Consequently, it is possible to balance user convenience with use-environment-adjusted security.

According to the first embodiment, the user authentication judging device controls authorization of using the information processing device only when the applicant is judged to be an authenticated user. Accordingly, when the PC is logged in, the user authentication judging device can quickly authenticate and judge an applicant as a user him/herself, and authorize the applicant to use the PC. Alternatively, when a USB memory is connected to the PC, even if the applicant who has connected the USB memory to the PC is a user authorized to take confidential information out, the user authentication judging device can prevent the applicant from using the PC by connecting the USB memory, until the applicant is authenticated as the user him/herself with high accuracy. Consequently, it is possible to balance user convenience with use-environment-adjusted security.

### Second Embodiment

In the above-described first embodiment, only one person is registered as the user of an information processing device. However, in a second embodiment, a plurality of persons is registered as users of an information processing device.

### Outline and Characteristics of User Authentication Judging Device according to Second Embodiment

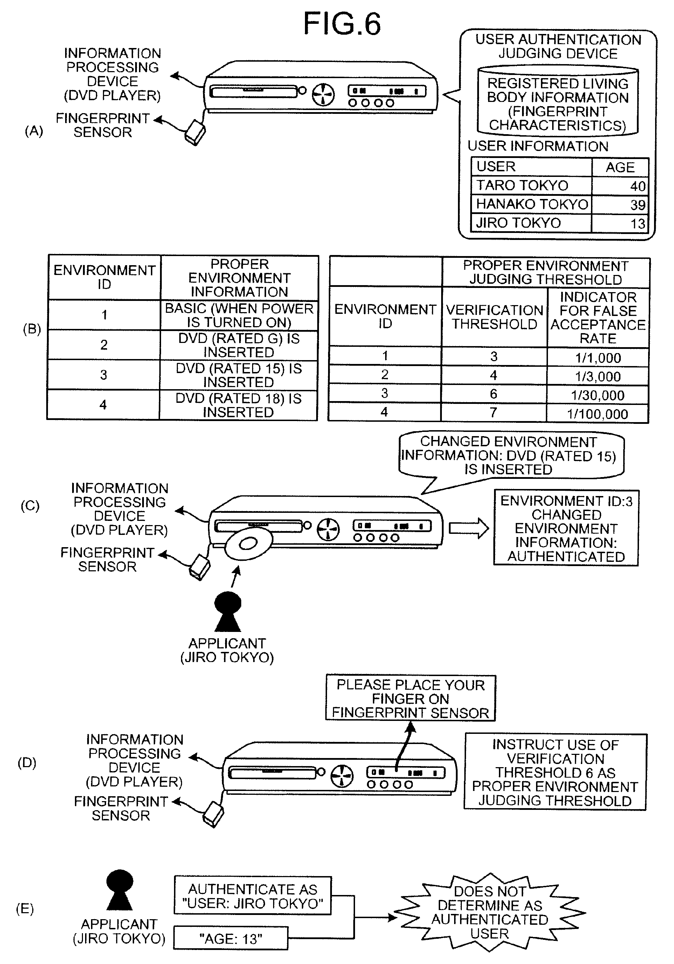

With reference to FIG. 6, main characteristic of a user authentication judging device according to the second embodiment will be specifically described. FIG. 6 is a schematic for explaining an outline and characteristics of the user authentication judging device according to the second embodiment.

The user authentication judging device according to the second embodiment, similar to that of the first embodiment, judges whether an applicant of an information processing device is an authenticated user, by using registered living body information of a person registered as the user of the information processing device, and a proper environment judging threshold set depending on the use environment of the information processing device. The user authentication judging device according to the second embodiment, as illustrated in FIG. 6(A), is incorporated into a DVD player that is an information processing device at home, and receives a fingerprint image from an applicant, through a fingerprint sensor mounted on the DVD player.

The user authentication judging device according to the second embodiment also stores therein user information that is personal information of a plurality of users. For example, as illustrated in FIG. 6(A), the user authentication judging device stores therein personal information on each of the family members who are registered as users of the DVD player, e.g., the "age" of "Taro Tokyo" is "40", the "age" of "Hanako Tokyo" is "39", and the "age" of "Jiro Tokyo" is "13".

The user authentication judging device according to the second embodiment, similar to that of the first embodiment, stores therein proper environment information of the DVD player and a proper environment judging threshold set for each piece of the proper environment information. For example, as illustrated in the left table in FIG. 6(B), the user authentication judging device stores therein proper environment information of the DVD player, e.g., the DVD player is turned on, a DVD with a movie "Rated G for general audiences" is inserted, a DVD with a movie "Rated 15" is inserted, and a DVD with a movie "Rated 18" is inserted, whose ratings are determined by the Code of Ethics, in association with "environment IDs: 1 to 4". As illustrated in the right table in FIG. 6(B), the user authentication judging device also stores therein a proper environment judging threshold for each of the "environment IDs: 1 to 4". For example, the user authentication judging device sets and stores therein the "verification threshold: 3" adjusted so that an "indicator for the false acceptance rate is one thousandth", as the proper environment threshold of the "environment ID: 1" that indicates the "basic (when power is turned on)". The user authentication judging device also sets and stores therein the "verification threshold: 6" adjusted so that an "indicator for the false acceptance rate is one thirty-thousandth", as the proper environment threshold of the "environment ID: 3" that indicates the "Rated 15 DVD is inserted".

The user authentication judging device according to the second embodiment, similar to that of the first embodiment, collects changed environment information that is information on the changed use environment, while detecting that an applicant has changed the use environment of the DVD player, and only when the collected changed environment information matches with any piece of the proper environment information, determines to authenticate the changed environment information. For example, as illustrated in FIG. 6(C), the user authentication judging device collects the "changed environment information: Rated 15 DVD is inserted", while detecting that "Jiro Tokyo" who is an applicant has inserted a DVD with a movie Rated 15 into the DVD player, and determines to authenticate the changed environment information. This is because the changed environment information is matched with the "environment ID: 3" stored therein as proper environment information.

As illustrated in FIG. 6(C), when the "changed environment information: Rated 15 DVD is inserted" is authenticated as the "environment ID: 3", for example, as illustrated in FIG. 6(D), the user authentication judging device according to the second embodiment instructs "Jiro Tokyo" who is an applicant to provide a fingerprint image through a fingerprint sensor, by displaying "please place your finger on the fingerprint sensor" on a displaying unit of the DVD player. The user authentication judging device also instructs setting of the '"verification threshold: 6" adjusted so that an "indicator for the false acceptance rate is one thirty-thousandth"' that is the proper environment judging threshold corresponding to the "environment ID: 3", among the proper environment judging thresholds, as an object to be compared with the similarity.

The user authentication judging device according to the second embodiment instructs the verification authenticating unit to further refer to the user information, while the verification authenticating unit performs authentication judgment by verifying the living body information received from the applicant with the registered living body information. Accordingly, the user authentication judging device according to the second embodiment extracts fingerprint characteristics from the fingerprint image received from the applicant (Jiro Tokyo) as verification data, and calculates the similarity by verifying the extracted fingerprint characteristics with the fingerprint characteristics stored in advance as registered living body information. If the calculated similarity is equal to or more than the proper environment judging threshold set as the "verification threshold: 6", the user authentication judging device authenticates the applicant (Jiro Tokyo) as a user. However, at this time, the verification authenticating unit also refers to the user information, and if the age of "Jiro Tokyo" is "13", the verification authenticating unit, does not judge "Jiro Tokyo" as an authenticated user, and prevents "Jiro Tokyo" from inserting the DVD with a movie Rated 15 (see FIG. 6(E)).

In this manner, if "Jiro Tokyo", who is a thirteen-year-old child authorized to use a DVD player at home by the biometric authentication when the DVD player is turned on, inserts a DVD with a movie Rated 15 whose rating is determined by the Code of Ethics, the user authentication judging device according to the second embodiment can prevent "Jiro Tokyo" from reproducing and viewing the movie Rated 15. This is possible because the "Rating: R15" recorded on the DVD is collected as environment information, and the user authentication judging device can refer to the "age: 13" that is personal information on "Jiro Tokyo" during authentication judgment, after judging that the applicant is "Jiro Tokyo" himself. Accordingly, it is possible to balance parent/guardian convenience in the educational guidance with security of children in the educational environment.

### Configuration of User Authentication Judging Device according to Second Embodiment

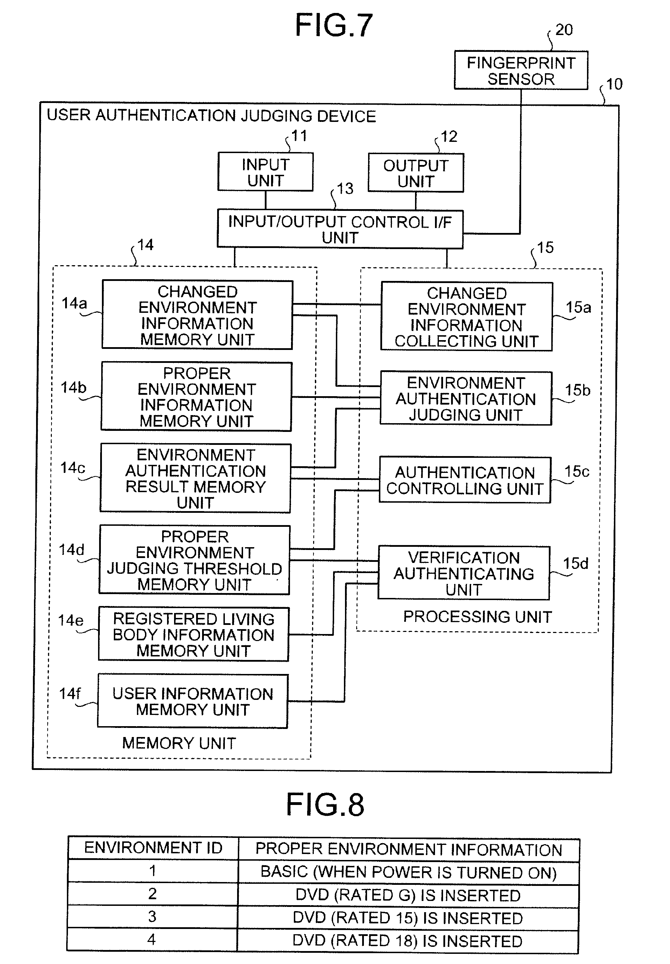

The user authentication device according to the second embodiment will now be described with reference to FIGS. 7 to 10. FIG. 7 is a schematic of the user authentication judging device according to the second embodiment. FIG. 8 is a schematic for explaining a proper environment information memory unit according to the second embodiment.

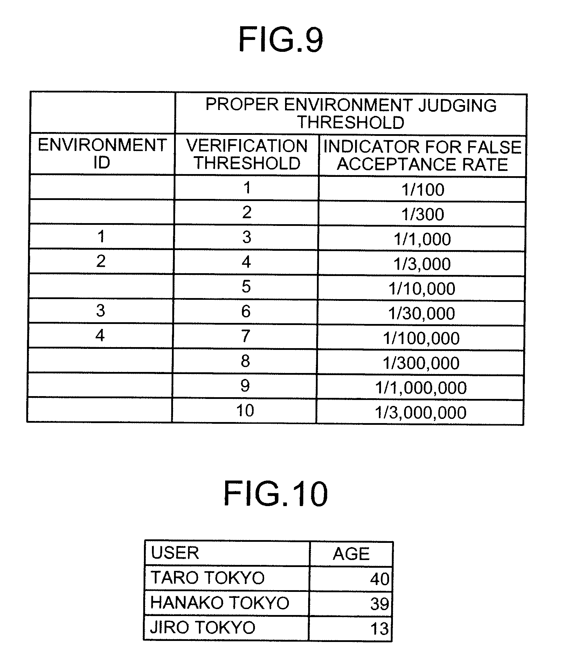

FIG. 9 is a schematic for explaining a proper environment judging threshold memory unit according to the second embodiment. FIG. 10 is a schematic for explaining a user information memory unit according to the second embodiment.

As illustrated in FIG. 7, this user authentication judging device 10 according to the second embodiment is basically the same as the user authentication judging device 10 according to the first embodiment. However, the user authentication judging device 10 according to the second embodiment is different from that of the first embodiment in including a user information memory unit 14f. This will be described in detail below. The user information memory unit 14f corresponds to a "user information memory unit" disclosed in the appended claims. The user information memory unit 14f is also incorporated into the DVD player, which is an information processing device.

The user information memory unit 14f further stores therein user information that is personal information on a plurality of users. For example, as illustrated in FIG. 10, the user information memory unit 14f stores therein personal information on each family member, e.g., the "age" of "Taro Tokyo" is "40", the "age" of "Hanako Tokyo" is "39", and the "age" of "Jiro Tokyo" is "13".

The proper environment information memory unit 14b stores therein proper environment information that is environment information considered appropriate for the use environment of the information processing device (DVD player). For example, as illustrated in FIG. 8, the proper environment information memory unit 14b stores therein proper environment information of the DVD player, e.g., the DVD player is turned on, a DVD with a movie "Rated G for general audiences" is inserted, a DVD with a movie "Rated 15" is inserted, or a DVD with a movie "Rated 18" is inserted, whose ratings are determined by the Code of Ethics, in association with "environment IDs: 1 to 4".

The proper environment judging threshold memory unit 14d stores therein a proper environment judging threshold that is a judging threshold set for each piece of the proper environment information stored in the proper environment information memory unit 14b. For example, as illustrated in FIG. 9, the proper environment judging threshold memory unit 14d stores therein a proper environment judging threshold for each of the "environment IDs: 1 to 4". For example, the proper environment judging threshold memory unit 14d sets and stores therein the "verification threshold: 3" adjusted so that an "indicator for the false acceptance rate is one thousandth" as the proper environment threshold of the "environment ID: 1" that indicates the "basic (when power is turned on). The proper environment judging threshold memory unit 14d also sets and stores therein the "verification threshold: 6" adjusted so that an "indicator for the false acceptance rate is one thirty-thousandth" as the proper environment threshold of the "environment ID: 3" that indicates the "Rated 15 DVD is inserted". In FIG. 9, information on proper environment thresholds in which an "environment ID" is not registered, e.g., the "verification threshold: 2" adjusted so that an "indicator for the false acceptance rate is one three-hundredth" are also illustrated.

The registered living body information memory unit 14e stores therein registered living body information that is living body information on a plurality of persons registered as users of the information processing device (DVD player) in advance in association with each user. For example, the registered living body information memory unit 14e stores therein the fingerprint characteristics extracted from fingerprint images obtained from the users of the information processing device (PC) in association with each user.

For example, when the environment authentication judging unit 15b authenticates that the "changed environment information: Rated 15 DVD is inserted" collected by the changed environment information collecting unit 15a is the "environment ID: 3", as illustrated in FIG. 6(C), the authentication controlling unit 15c instructs "Jiro Tokyo" who is an applicant to provide a fingerprint image through the fingerprint sensor 20, by displaying "please place your finger on the fingerprint sensor" on the displaying unit of the DVD player, as illustrated in FIG. 6(D). The authentication controlling unit 15c also instructs setting of the '"verification threshold: 6" adjusted so that an "indicator for the false acceptance rate is one thirty-thousandth"' that is the proper environment judging threshold corresponding to the "environment ID: 3", among the proper environment judging thresholds stored in the proper environment judging threshold memory unit 14d, as an object to be compared with the similarity.

The authentication controlling unit 15c instructs the verification authenticating unit 15d to further refer to the user information stored in the user information memory unit 14f, while the verification authenticating unit 15d performs authentication judgment by verifying the living body information received from the applicant with the registered living body information.

The verification authenticating unit 15d, for example, extracts fingerprint characteristics from the fingerprint image received from the applicant (Jiro Tokyo) as verification data, and calculates the similarity by verifying the extracted fingerprint characteristics with the fingerprint characteristics stored in the registered living body information memory unit 14e as registered living body information. If the calculated similarity is equal to or more than the proper environment judging threshold set as the "verification threshold: 6", the verification authenticating unit 15d authenticates the applicant (Jiro Tokyo) as a user. However, at this time, the verification authenticating unit 15d also refers to the user information stored in the user information memory unit 14f, and if the age of "Jiro Tokyo" is "13", does not judge "Jiro Tokyo" as an authenticated user. Accordingly, the authentication controlling unit 15c refers to the judgment result, and prevents "Jiro Tokyo" from reproducing the DVD with a movie "Rated 15" (see FIG. 6(E)).

### Procedure of Process Performed by User Authentication Judging Device according to Second Embodiment

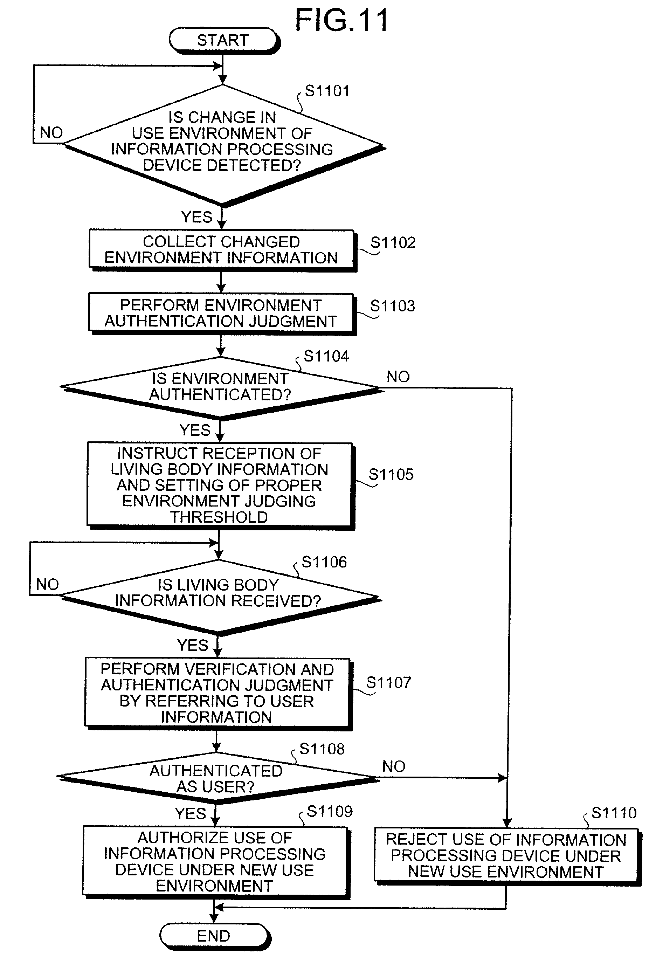

With reference to FIG. 11, a process performed by the user authentication judging device 10 according to the second embodiment will now be described. FIG. 11 is a schematic for explaining the process performed by the user authentication judging device according to the second embodiment.

Upon detecting the change in the use environment of the DVD player used as an information processing device (YES at Step S1101), the changed environment information collecting unit 15a in the user authentication judging device 10 according to the second embodiment collects changed environment information that is information on the changed use environment (Step S1102). For example, if a DVD with a movie "Rated 15" is inserted into the DVD player, the changed environment information collecting unit 15a collects the "changed environment information: Rated 15 DVD is inserted".

The environment authentication judging unit 15b then performs authentication judgment by comparing the changed environment information collected by the changed environment information collecting unit 15a with the proper environment information stored in the proper environment information memory unit 14b (Step S1103). For example, if the "changed environment information: Rated 15 DVD is inserted" matches with the "environment ID: 3" illustrated in FIG. 8, the environment authentication judging unit 15b determines to authenticate the changed environment information.

If the changed environment information is not authenticated as a new use environment (NO at Step S1104), the authentication controlling unit 15c prevents the applicant from using the information processing device (DVD player) under the new use environment (Step S1110), and finishes the process.

Alternatively, if the changed environment information is authenticated as a new use environment (YES at Step S1104), the authentication controlling unit 15c controls authentication judgment by instructing reception of living body information from the applicant, and by instructing setting of a proper environment judging threshold corresponding to the proper environment information matched with the changed environment information, among the proper environment judging thresholds stored in the proper environment judging threshold memory unit 14d, as an object to be compared with the similarity (Step S1105). In other words, if the "changed environment information: Rated 15 DVD is inserted" is authenticated as the "environment ID: 3", the authentication controlling unit 15c, for example, displays "please place your finger on the fingerprint sensor" on the monitor of the output unit 12. Accordingly, the authentication controlling unit 15c instructs the applicant who has inserted the Rated 15 DVD to provide a fingerprint image through the fingerprint sensor 20. The authentication controlling unit 15c also controls authentication judgment by instructing setting of the '"verification threshold: 6" adjusted so that an "indicator for the false acceptance rate is one thirty-thousandth"' that is the proper environment judging threshold corresponding to the "environment ID: 3", among the proper environment judging thresholds, as an object to be compared with the similarity.

Upon receiving the living body information of the applicant through the fingerprint sensor 20 (YES at Step S1106), the authentication controlling unit 15c instructs the verification authenticating unit 15d to perform verification and authentication judgment using the proper environment judging threshold, by referring to the user information stored in the user information memory unit 14f (Step Sol107) . For example, when the applicant (Jiro Tokyo) from whom the living body information is received is authenticated as a user based on the proper environment judging threshold set as the "verification threshold: 6", the verification authenticating unit 15d refers to the user information stored in the user information memory unit 14f. If the age of "Jiro Tokyo" is "13", the verification authenticating unit 15d does not judge "Jiro Tokyo" as an authenticated user (see FIG. 6(E)).

If the verification authenticating unit 15d judges the applicant as an authenticated user (YES at Step S1108), the authentication controlling unit 15c authorizes the applicant to use the information processing device (DVD player) under the new use environment (Step S1109), and finishes the process.

Alternatively, if the verification authenticating unit 15d does not judge the applicant as an authenticated user (NO at Step S1108), the authentication controlling unit 15c prevents the applicant from using the information processing unit (DVD player) under the new use environment (Step S1110), and finishes the process.

### Advantages of Second Embodiment

As described above, according to the second embodiment, when the user is present in a plurality, the user authentication judging device stores therein user information that is personal information on each of the plurality of users. The authentication controlling unit 15c instructs the verification authenticating unit 15d to further refer to the user information, while the verification authenticating unit 15d performs authentication judgment by verifying the living body information received from the applicant with the registered living body information. Accordingly, if "Jiro Tokyo" who is a thirteen-year-old child authorized to use a DVD player at home by the biometric authentication when the DVD player is turned on, inserts a DVD with a movie Rated 15 whose rating is determined by the Code of Ethics, the user authentication judging device can prevent "Jiro Tokyo" from reproducing and viewing the movie Rated 15. This is possible because the "Rating: R15" recorded on the DVD is collected as environment information at the same time, and the user authentication judging device can refer to the "age: 13" that is personal information of "Jiro Tokyo", while judging the applicant as "Jiro Tokyo" himself during authentication judgment. Accordingly, it is possible to balance parent/guardian convenience in the educational guidance with security of children in the educational environment.

### Third Embodiment

In the above-described first and second embodiments, the user authentication judgment is performed by a single device. However, in a third embodiment, a user authentication judging system in which the environment authentication in the user authentication judgment is performed on an environment authenticating server installed separately will be described. In the above-described second embodiment, the authentication judgment is performed by further referring to personal information on each person registered as a user of the information processing device. However, in the third embodiment, an authentication judgment is performed by further referring to information on user group to which a person registered as a user of the information processing device belongs.

### Outline and Characteristics of User Authentication Judging System according to Third Embodiment

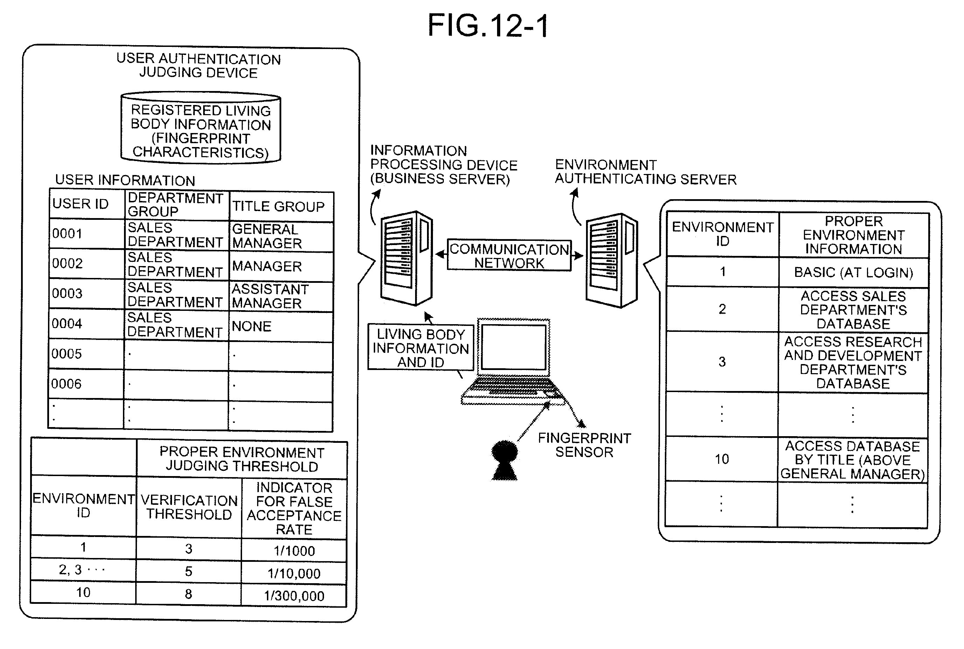

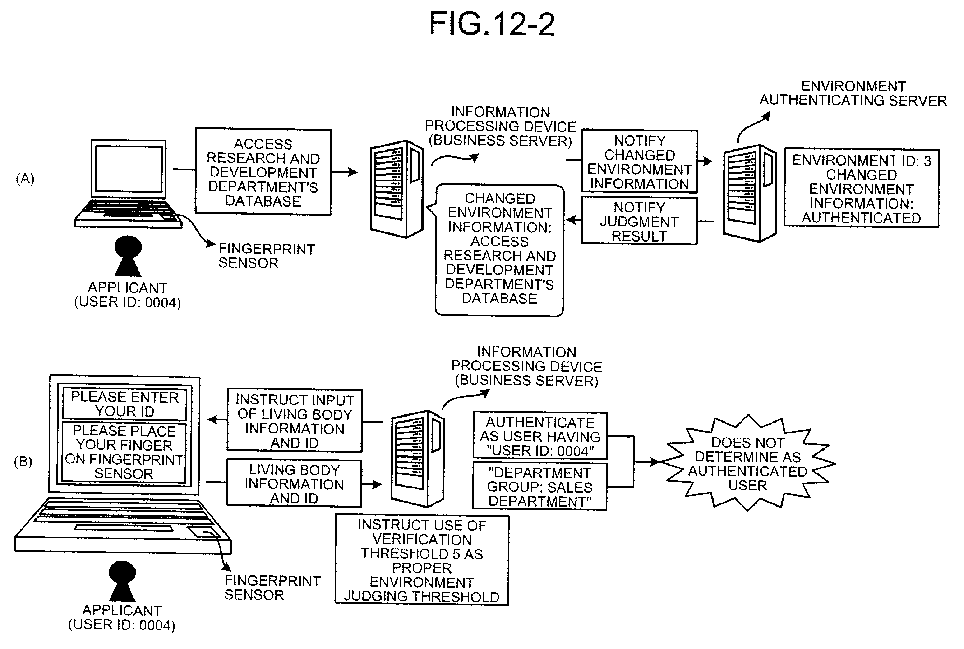

With reference to FIG. 12-1 and FIG. 12-2, main characteristic of a user authentication judging system according to the third embodiment will be specifically described. FIG. 12-1 and FIG. 12-2 are schematics for explaining an outline and characteristics of the user authentication judging system according to the third embodiment.

The user authentication judging system according to the third embodiment, similar to the first and second embodiments, judges whether an applicant of the information processing device is an authenticated user, by using registered living body information of a person registered as a user of the information processing device, and a proper environment judging threshold set based on the use environment of the information processing device. As illustrated in FIG. 12-1, the user authentication judging system includes a user authentication judging device included in a business server used in a company as an information processing device and an environment authenticating server connected to the user authentication judging device through a communication network.

The user authentication judging device in the user authentication judging system according to the third embodiment, as illustrated in FIG. 12-1, receives living body information (more specifically, fingerprint image) from an applicant of the business server, through a fingerprint sensor mounted on a terminal such as a PC. By further receiving an ID from an input unit of the terminal, the user authentication judging device executes a "1:1 authentication" method that verifies the living body information corresponding to the received ID in the registered living body information (more specifically, fingerprint characteristics) of each of the users registered as the users of the business server with the received living body information.

The user authentication judging device in the user authentication judging system according to the third embodiment stores therein user group information that is information on each group to which each user belongs as user information. For example, as illustrated in FIG. 12-1, the user authentication judging device stores therein user information, e.g., a "department group" of a user having a "user ID: 0001" is a "sales department" and a "title group" of the user is a "general manager", and a "department group" of a user having a "user ID: 0004" is the "sales department", and a "title group" of the user is "none".

In the user authentication judging system according to the third embodiment, the environment authenticating server stores therein proper environment information of the business server, and the user authentication judging device stores therein a proper environment judging threshold set for each piece of the proper environment information. For example, as illustrated in FIG. 12-1, the environment authenticating server in the user authentication judging system according to the third embodiment stores therein proper environment information of the business server, such as access the business server (basic (at login)), access the sales department's database, access the research and development department's database, and access the database by title (above general manager), in association with "environment IDs".

The user authentication judging device in the user authentication judging system according to the third embodiment, for example, as illustrated in FIG. 12-1, stores therein a proper environment judging threshold for each of the "environment IDs". For example, the user authentication judging device sets and stores therein the "verification threshold: 3" adjusted so that an "indicator for the false acceptance rate is one thousandth", as the proper environment threshold of the "environment ID: 1" that indicates the "basic (at the access)", and sets and stores therein the "verification threshold: 5" adjusted so that an "indicator for the false acceptance rate is one ten-thousandth", as the proper environment threshold of the "environment ID: 3" that indicates "access the research and development department's database". The user authentication judging device also sets and stores therein the "verification threshold: 10" adjusted so that an "indicator for the false acceptance rate is one three-hundred-thousandth", as the proper environment threshold of the "environment ID: 10" that indicates "access the database by title (above general manager)".

The user authentication judging device in the user authentication judging system according to the third embodiment collects changed environment information that is information on the changed use environment, while detecting that an applicant has changed the use environment of the business server, and notifies the environment authenticating server in the user authentication judging system according to the third embodiment of the collected changed environment information. The environment authenticating server determines to authenticate changed environment information, only if the notified changed environment information is matched with any piece of the proper environment information. If the notified changed environment information does not match with any piece of the proper environment information, the environment authenticating server does not determine to authenticate the changed environment information, and notifies the user authentication judging device of the judgment result.

For example, as illustrated in FIG. 12-2 (A), if the user having the "user ID: 0004" authenticated to access the business server by the "verification threshold: 3" further tries to "access the research and development department's database" of the business server, from the own terminal as an applicant, the user authentication judging device collects the "changed environment information: access the research and development department's database", and notifies the environment authenticating server of the collected information. If the notified "changed environment information: access the research and development department's database" is matched with the "environment ID: 3" stored therein as proper environment information, the environment authenticating server determines to authenticate the changed environment information, and notifies the user authentication judging device of the judgment result.

As illustrated in FIG. 12-2 (A), if the "changed environment information: access the research and development department's database" is authenticated as the "environment ID: 3", for example, the user authentication judging device according to the third embodiment, as illustrated in FIG. 12-2 (B), instructs the applicant having the "user ID: 0004" to provide an ID and a fingerprint image, by displaying "please enter your ID" and "please place your finger on the fingerprint sensor" on a monitor of the applicant's terminal. The user authentication judging device also instructs setting of the '"verification threshold: 5" adjusted so that an "indicator for the false acceptance rate is one ten-thousandth" that is the proper environment judging threshold corresponding to the "environment ID: 3"', among the proper environment judging thresholds, as an object to be compared with the similarity.

The user authentication judging device in the user authentication judging system according to the third embodiment instructs the verification authenticating unit to further refer to the user group information as user information, while the verification authenticating unit performs authentication judgment by verifying the living body information received from the applicant with the registered living body information. Accordingly, the user authentication judging device in the user authentication judging system according to the third embodiment, extracts fingerprint characteristics from the received fingerprint image of the applicant as verification data, and calculates the similarity by verifying the extracted fingerprint characteristics with the fingerprint characteristics as registered living body information corresponding to the received ID. If the calculated similarity is equal to or more than the proper environment judging threshold set as the "verification threshold: 5", the user authentication judging device authenticates the applicant (user ID: 0004) as a user. However, at this time, the user authentication judging device also refers to the user group information, and if the department group of the "user ID: 0004" is the "sales department", the user authentication judging device does not judge the "user ID: 0004" as a user, and prevents the "user ID: 0004" from accessing the research and development department's database and referring the data (see FIG. 12-2 (B)). When the applicant having the "user ID: 0004" tries to "access the database by title (above general manager)", similar to when the "user ID: 0004" tries to "access the research and development department's database", even if the environment authentication and the biometric authentication are successful, if the "title group" of the "user ID: 0004" is "none", the user authentication judging device prevents the "user ID: 0004" from accessing the database by title (above general manager) and referring the data.

In the present embodiment, the "1:1 authentication" method is performed. However, the present invention is not limited thereto, and the "1:N authentication" method may also be performed.

In this manner, the user authentication judging system according to the third embodiment, similar to the first and second embodiments, can execute personal authentication with optimum authentication accuracy, depending on the use environment of the business server. Accordingly, it is possible to balance user convenience with use-environment-adjusted security. Because a system administrator can integrally manage and control the use environment of the information processing device used by the employees, it is also possible to balance convenience of the company's system administrator with use-environment-adjusted security of information important to the company organization.

### Configuration of User Authentication Judging Device according to Third Embodiment

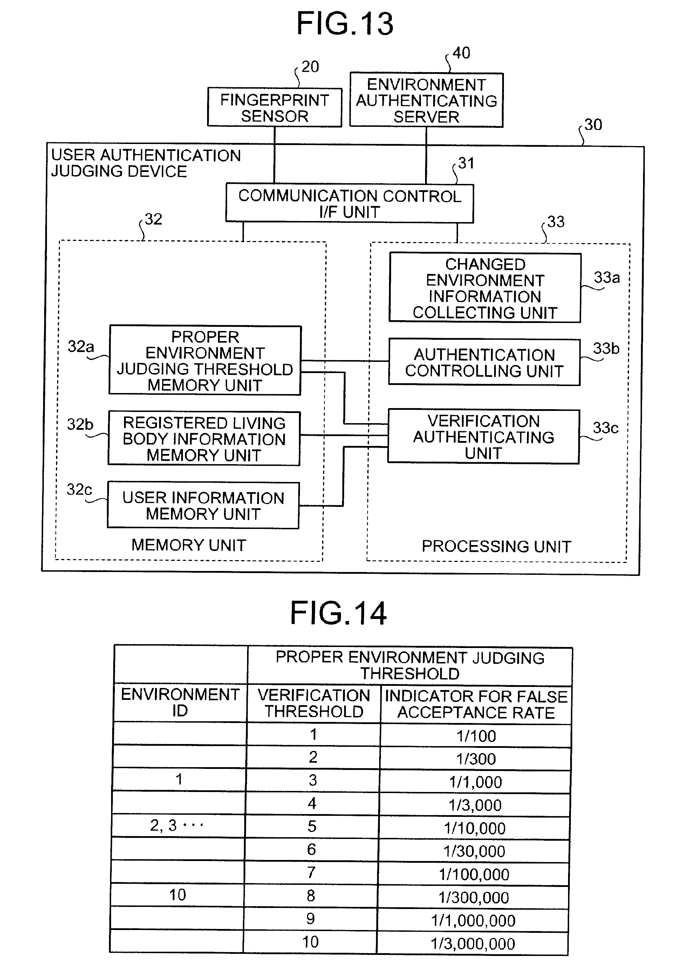

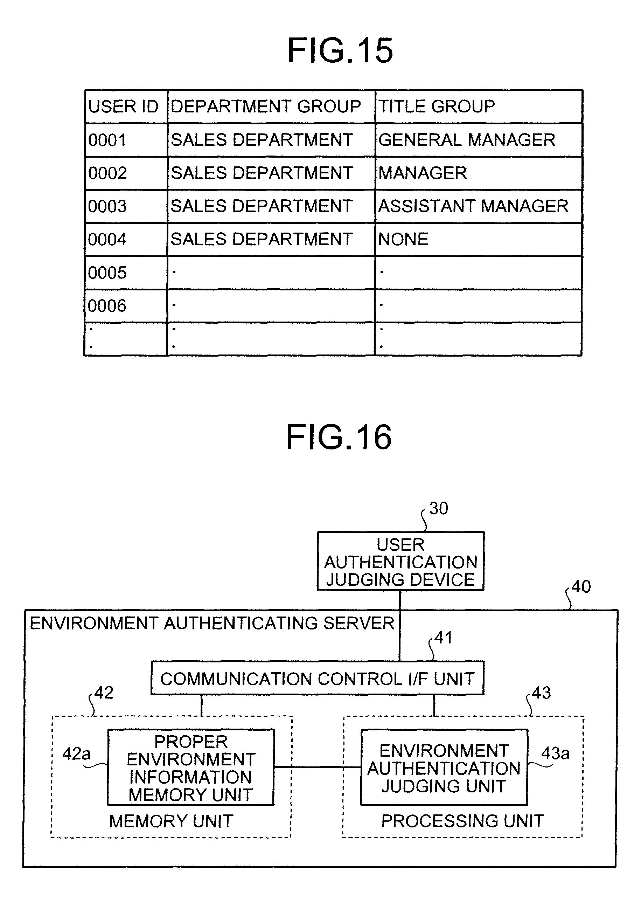

With reference to FIGS. 13 to 15, the configuration of the user authentication judging device according to the third embodiment will be described. FIG. 13 is a schematic of the user authentication judging device according to the third embodiment. FIG. 14 is a schematic for explaining a proper environment judging threshold memory unit according to the third embodiment. FIG. 15 is a schematic for explaining a user information memory unit according to the third embodiment.

As illustrated in FIG. 13, a user authentication judging device 30 according to the third embodiment includes a communication control I/F unit 31, a memory unit 32, and a processing unit 33. The user authentication judging device 30 is also connected to the fingerprint sensor 20 mounted on a user's terminal, which is not illustrated, and an environment authenticating server 40. The user authentication judging device 30 is incorporated into a business server as an information processing device.

The fingerprint sensor 20 receives a fingerprint image from an applicant, and the received fingerprint image is transmitted to the processing unit 33, through the communication control I/F unit 31, which will be described later.

The communication control I/F unit 31 controls data transmission between the fingerprint sensor 20 and the environment authenticating server 40, and the memory unit 32 and the processing unit 33.

The memory unit 32 stores therein data used for various types of processing performed by the processing unit 33. As those closely related to the present invention, as illustrated in FIG. 13, the memory unit 32 includes a proper environment judging threshold memory unit 32a, a registered living body information memory unit 32b, and a user information memory unit 32c.

The proper environment judging threshold memory unit 32a stores therein a proper environment judging threshold that is a judging threshold set for each piece of the proper environment information stored in the environment authenticating server 40, which will be described later. For example, as illustrated in FIG. 14, the proper environment judging threshold memory unit 32a sets and stores therein the "verification threshold: 3" adjusted so that an "indicator for the false acceptance rate is one thousandth", as the proper environment threshold of the "environment ID: 1", and sets and stores therein the "verification threshold: 5" adjusted so that an "indicator for the false acceptance rate is one ten-thousandth", as the proper environment threshold of the "environment ID: 3". The proper environment judging threshold memory unit 32a also sets and stores therein the "verification threshold: 10" adjusted so that an "indicator for the false acceptance rate is one three-hundred-thousandth", as the proper environment threshold of the "environment ID: 10" that indicates "access the database by title (above general manager). In FIG. 14, information on proper environment thresholds in which an "environment ID" is not registered, e.g., the "verification threshold: 2" adjusted so that an "indicator for the false acceptance rate is one three-hundredth" are also illustrated.

The registered living body information memory unit 32b stores therein registered living body information that is living body information on a person registered as a user of an information processing device (business server) in advance in association with the ID of each user. For example, the registered living body information memory unit 32b stores therein the fingerprint characteristics extracted from the fingerprint image obtained from a user of the business server, in association with the ID of each user.

The user information memory unit 32c stores therein user group information that is information on each group to which each user belongs, as user information. For example, as illustrated in FIG. 15, the user information memory unit 32c stores therein user information, e.g., a "department group" of a user having the "user ID: 0001" is a "sales department" and a "title group" of the user is a "general manager", and stores therein information, e.g., a "department group" of a user having the "user ID: 0004" is the "sales department" and a "title group" of the user is "none".

The processing unit 33 executes various types of processing based on data transmitted from the communication control I/F unit 31. As those closely related to the present invention, as illustrated in FIG. 13, the processing unit 33 includes a changed environment information collecting unit 33a, an authentication controlling unit 33b, and a verification authenticating unit 33c.

The changed environment information collecting unit 33a collects changed environment information that is information on the changed use environment, while detecting that the applicant has changed the use environment of the information processing device (business server), and notifies the environment authenticating server 40 of the result through the communication control I/F unit 31. For example, when the applicant (user ID: 0004) tries to "access the research and development department's database" of the business server from the own terminal, the changed environment information collecting unit 33a collects the "changed environment information: access the research and development department's database", and notifies the environment authenticating server 40 of the collected information.

Upon receiving the judgment result indicating that the "changed environment information is authenticated" from the environment authenticating server 40, the authentication controlling unit 33b controls authentication judgment by instructing reception of living body information from the applicant, and by instructing setting of a proper environment judging threshold corresponding to the proper environment information matched with the authenticated changed environment information, among the proper environment judging thresholds stored in the proper environment judging threshold memory unit 32a, as an object to be compared with the similarity. In other words, if the "changed environment information: access the research and development department's database" is authenticated as the "environment ID: 3" in the environment authenticating server 40, for example, as illustrated in FIG. 12-2 (B), the authentication controlling unit 33b instructs the applicant having the "user ID: 0004" to provide an ID and a fingerprint image, by displaying "please enter your ID" and "place your finger on the fingerprint sensor" on the monitor of the applicant's terminal. The authentication controlling unit 33b also instructs setting of the '"verification threshold: 5" adjusted so that an "indicator for the false acceptance rate is one ten-thousandth"' (see FIG. 14) that is the proper environment judging threshold corresponding to the "environment ID: 3", among the proper environment judging thresholds stored in the proper environment judging threshold memory unit 32a, as an object to be compared with the similarity.

The authentication controlling unit 33b instructs the verification authenticating unit 33c to further refer to the user group information stored in the user information memory unit 32c as user information, while the verification authenticating unit 33c performs authentication judgment by verifying the living body information received from the applicant with the registered living body information.

The verification authenticating unit 33c extracts fingerprint characteristics from the fingerprint image of the applicant received through the fingerprint sensor 20 as verification data, and calculates the similarity by verifying the extracted fingerprint characteristics with the fingerprint characteristics (held in the registered living body information memory unit 32b) corresponding to the ID received from the terminal including the fingerprint sensor 20, as registered living body information. If the calculated similarity is equal to or more than the proper environment judging threshold set as the "verification threshold: 5", the verification authenticating unit 33c authenticates the applicant (user ID: 0004) as a user. However, at this time, the verification authenticating unit 33c also refers to the user group information stored in the user information memory unit 32c, and if the department group of the "user ID: 0004" is the "sales department", the verification authenticating unit 33c does not judge the "user ID: 0004" as an authenticated user (see FIG. 12-2 (B)).

The authentication controlling unit 33b authorizes the applicant to use the information processing device (business server), only when the applicant is judged to be an authenticated user.

### Configuration of Environment Authenticating Server according to Third Embodiment

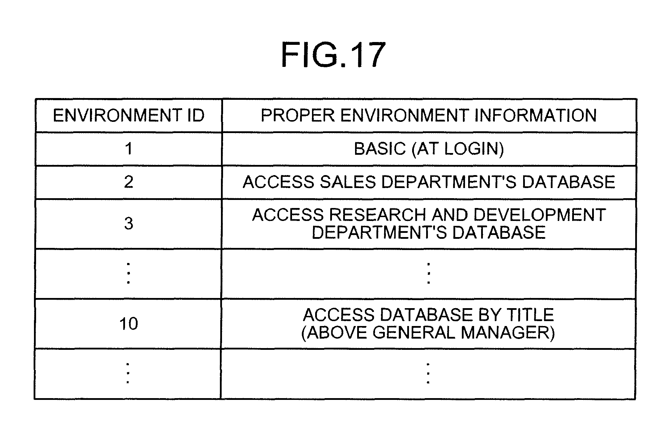

With reference to FIGS. 16 and 17, the configuration of the environment authenticating server according to the third embodiment will now be described. FIG. 16 is a schematic of the environment authenticating server according to the third embodiment. FIG. 17 is a schematic for explaining the proper environment information memory unit according to the third embodiment.

As illustrated in FIG. 16, the environment authenticating server 40 according to the third embodiment includes a communication control I/F unit 41, a memory unit 42, and a processing unit 43, and is connected to the user authentication judging device 30.

The communication control I/F unit 41 controls data transmission between the user authentication judging device 30, and the memory unit 42 and the processing unit 43.

The memory unit 42 stores therein data used for various types of processing performed by the processing unit 43. As those closely related to the present invention, as illustrated in FIG. 16, the memory unit 42 includes a proper environment information memory unit 42a.

The proper environment information memory unit 42a stores therein proper environment information that is information on an environment considered appropriate as the use environment of the information processing device (business server). For example, as illustrated in FIG. 17, the proper environment information memory unit 42a stores therein proper environment information of the business server, such as access the business server (basic (at login)), access the sales department's database, access the research and development department's database, and access the database by title (above general manager), in association with "environment IDs".

The processing unit 43 executes various types of processing based on data transmitted from the communication control I/F unit 41. As those closely related to the present invention, as illustrated in FIG. 16, the processing unit 43 includes an environment authentication judging unit 43a.

If the changed environment information notified from the user authentication judging device 30 through the communication control I/F unit 41 matches with any piece of the proper environment information stored in the proper environment information memory unit 42a, the environment authentication judging unit 43a determines to authenticate the changed environment information. If the notified changed environment information does not match with any piece of the proper environment information stored in the proper environment information memory unit 42a, the environment authentication judging unit 43a does not determine to authenticate the changed environment information. The environment authentication judging unit 43a notifies the user authentication judging device 30 of the judgment result through the communication control I/F unit 41.

### Procedure of Process Performed by User Authentication Judging System according to Third Embodiment

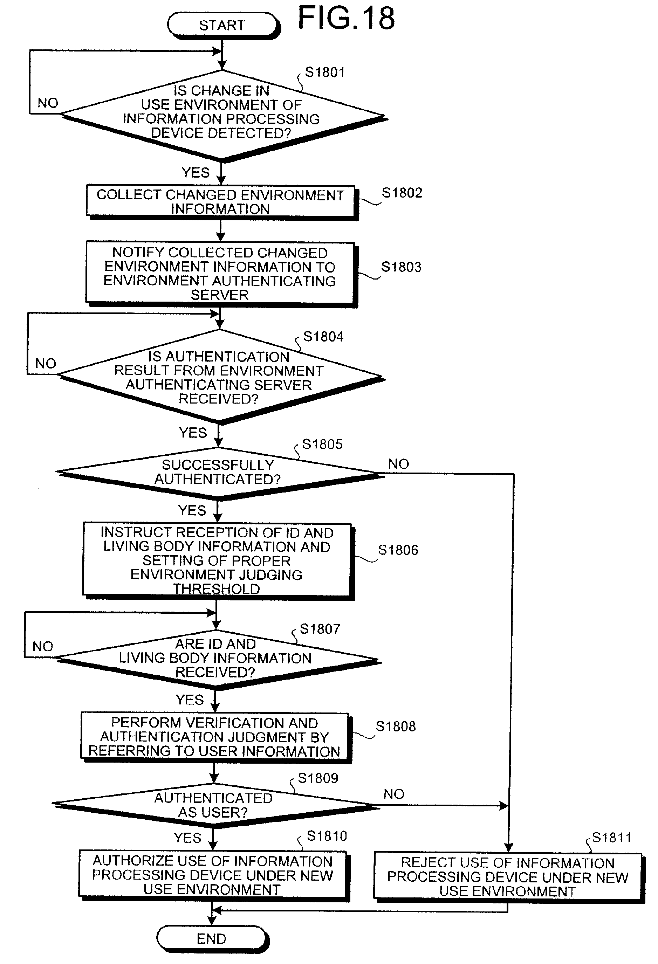

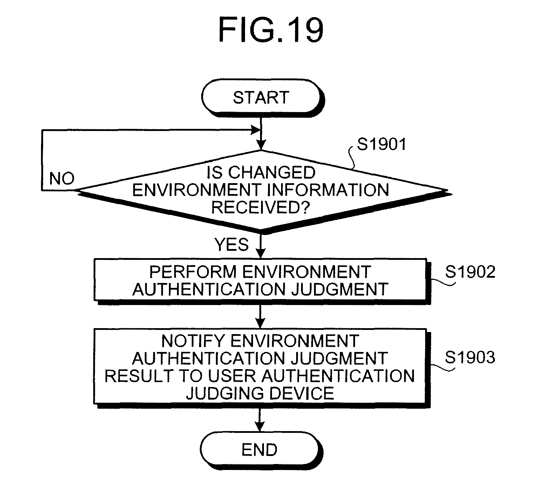

With reference to FIG. 18 and FIG. 19, a process performed by the user authentication judging system according to the third embodiment will now be described.
FIG. 18 is a schematic for explaining a process performed by the user authentication judging device according to the third embodiment. FIG. 19 is a schematic for explaining a process performed by the environment authenticating server according to the third embodiment.

### Procedure of Process Performed by User Authentication Judging Device according to Third Embodiment

As illustrated in FIG. 18, on detecting the change in the use environment of the business server as an information processing unit (YES at Step S1801), the changed environment information collecting unit 33a in the user authentication judging device 30 according to the third embodiment collects changed environment information that is information on the changed use environment (Step S1802), and notifies the environment authenticating server 40 of the collected changed environment information through the communication control I/F unit 31 (Step S1803). For example, if the applicant (user ID: 0004) tries to "access the research and development department's database" of the business server from the own terminal, the changed environment information collecting unit 33a collects the "changed environment information: access the research and development department's database" and notifies the environment authenticating server 40 of the collected information (see FIG. 12-2 (A)).

The authentication controlling unit 33b receives the authentication judgment result from the environment authenticating server 40 (YES at Step S1804), and if the received authentication judgment result is not "successfully authenticated" (NO at Step S1805), the authentication controlling unit 33b prevents the applicant from using the information processing device (business server) under the new use environment (Step S1811), and finishes the process.

Alternatively, if the received authentication judgment result is "successfully authenticated" (YES at Step S1805), the authentication controlling unit 33b controls authentication judgment by instructing acquisition of an ID and living body information from the applicant, and by instructing setting of a proper environment judging threshold corresponding to the proper environment information matched with the changed environment information, among the proper environment judging thresholds stored in the proper environment judging threshold memory unit 32a, as an object to be compared with the similarity (Step S1806). In other words, when the "changed environment information: access the research and development department's database" is authenticated as the "environment ID: 3", the authentication controlling unit 33b, for example, as illustrated in FIG. 12-2 (B), instructs the applicant having the "user ID: 0004" to provide an ID and a fingerprint image, by displaying "please enter your ID" and "please place your finger on the fingerprint sensor", on the monitor of the applicant's terminal. The authentication controlling unit 33b also instructs setting of the '"verification threshold: 5" adjusted so that an "indicator for the false acceptance rate is one ten-thousandth"' (see FIG. 14) that is the proper environment judging threshold corresponding to the "environment ID: 3", among the proper environment judging thresholds stored in the proper environment judging threshold memory unit 32a, as an object to be compared with the similarity.

Upon receiving the ID and the living body information of the applicant (YES at Step S1807), the authentication controlling unit 33b instructs the verification authenticating unit 33c to perform verification and authentication judgment using the proper environment judging threshold, by referring to the user group information stored in the user information memory unit 32c (Step S1808). In other words, the verification authenticating unit 33c extracts fingerprint characteristics from the fingerprint image of the applicant received through the fingerprint sensor 20 as verification data, and calculates the similarity by verifying the extracted fingerprint characteristics with the fingerprint characteristics (held in the registered living body information memory unit 32b) corresponding to the ID received from the terminal including the fingerprint sensor 20 as registered living body information. If the calculated similarity is equal to or more than the proper environment judging threshold set as the "verification threshold: 5", the verification authenticating unit 33c authenticates the applicant (user ID: 0004) as a user. However, at this time, the verification authenticating unit 33c also refers to the user group information stored in the user information memory unit 32c, and if the department group of the "user ID: 0004" is the "sales department", the verification authenticating unit 33c does not judge the applicant as an authenticated user (see FIG. 12-2 (B)).

If the verification authenticating unit 33c judges the applicant as an authenticated user (YES at Step S1809), the authentication controlling unit 33b authorizes the applicant to use the information processing device (business server) under the new use environment (Step S1810), and finishes the process.

Alternatively, if the verification authenticating unit 33c does not judge the applicant as an authenticated user (NO at Step S1809), the authentication controlling unit 33b prevents the applicant from using the information processing device (business server) under the new use environment (Step S1811), and finishes the process. For example, if the department group of the "user ID: 0004" is the "sales department", the verification authenticating unit 33c does not judge the applicant as an authenticated user, and the authentication controlling unit 33b prevents the applicant from accessing the research and development department's database and referring to the data (see FIG. 12-2 (B)).

### Procedure of Process Performed by Environment Authenticating Server according to Third Embodiment

As illustrated in FIG. 19, in the environment authenticating server 40 according to the third embodiment, upon receiving the changed environment information from the user authentication judging device 30 (YES at Step S1901), the environment authentication judging unit 43a performs authentication judgment by comparing the received changed environment information with the proper environment information stored in the proper environment information memory unit 42a (Step S1902). In other words, if the changed environment information notified from the user authentication judging device 30 through the communication control I/F unit 41 matches with any piece of the proper environment information stored in the proper environment information memory unit 42a, the environment authentication judging unit 43a determines to authenticate the changed environment information. If the notified changed environment information does not match with any piece of the proper environment information stored in the proper environment information memory unit 42a, the environment authentication judging unit 43a does not determine to authenticate the changed environment information.

The environment authentication judging unit 43a then notifies the user authentication judging device 30 of the environment authentication judgment result through the communication control I/F unit 41 (Step S1903), and finishes the process. For example, as illustrated in FIG. 12-2 (A), if the notified "changed environment information: access the research and development department's database" matches with the "environment ID: 3" stored as proper environment information, the environment authentication judging unit 43a determines to authenticate the changed environment information, and notifies the user authentication judging device of the judgment result.

### Advantages of Third Embodiment

As described above, according to the third embodiment, similar to the first and second embodiments, the user authentication judging system can execute personal authentication with optimum authentication accuracy, depending on the use environment of the information processing device (in the present embodiment, business server). Accordingly, it is possible to balance user convenience with use-environment-adjusted security. Because the authentication judgment of the use environment of the business server used by the users is performed by the environment authenticating server installed separately, the system administrator can integrally manage and control the use environment of the information processing device used by the employees. Consequently, it is possible to balance convenience of the company's system administrator with use-environment-adjusted security of information important to the company organization.

According to the third embodiment, the user information memory unit 32c stores therein user group information that is information on each group to which each user belongs, and the authentication controlling unit 33b instructs the verification authenticating unit 33c to further refer to the user group information stored in the user information memory unit 32c of the user authentication judging device 30, while the verification authenticating unit 33c performs authentication judgment by verifying the living body information received from the applicant with the registered living body information. Accordingly, when the applicant having the "user ID: 0004" who belongs to the "sales department" authorized to use the business server installed in the company by the biometric authentication when the applicant accesses the business server, tries to access the "research and development department's database" to which only the users who belong to the "research and development department" are authorized to refer to, the authentication controlling unit 33b can prevent the applicant from referring to the data stored in the research and development department's database. This is possible because the "access the research and development department's database" is collected as environment information, and the verification authenticating unit 33c can refer to the "department: sales department" that is the user group information of the person, while judging the applicant as the user him/herself having the "user ID: 0004" during authentication judgment. Accordingly, it is possible to balance convenience of the system administrator with use-environment-adjuste security of information important to the company organization.

### Fourth Embodiment

In the above-described third embodiment, the user authentication judging system in which environment authentication in the user authentication judgment is carried out by the environment authenticating server installed separately is described. In a fourth embodiment, a user authentication judging system in which biometric authentication in the user authentication judgment is carried out by a living body authenticating server installed separately will be described.

### Outline and Characteristics of User Authentication Judging System according to Fourth Embodiment

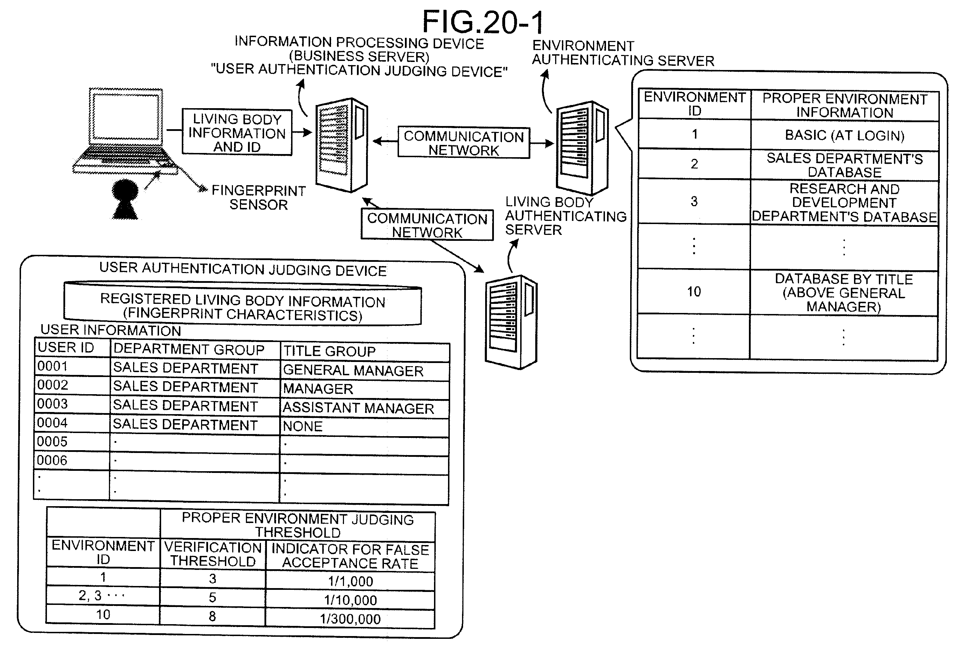

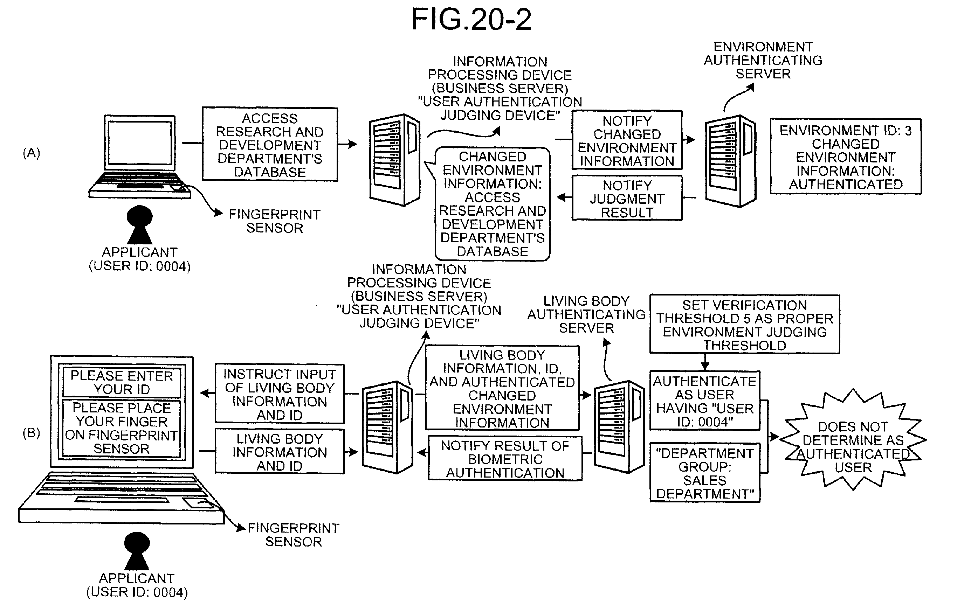

With reference to FIG. 20-1 and FIG. 20-2, main characteristic of a user authentication judging system according to the fourth embodiment will be specifically described. FIGS. 20-1 and 20-2 are schematics for explaining an outline and characteristics of the user authentication judging system according to the fourth embodiment.

The user authentication judging system according to the fourth system, similar to the first to third embodiments, judges whether an applicant of an information processing device is an authenticated user, by using the registered living body information of a person registered as a user of the information processing device, and a proper environment judging threshold set depending on the use environment of the information processing device. As illustrated in FIG. 20-1, the user authentication judging system includes a user authentication judging device in a business server used in a company as an information processing device, and the environment authenticating server and the living body authenticating server connected to the user authentication judging device through a communication network.

The user authentication judging device in the user authentication judging system according to the fourth embodiment, similar to the third embodiment, receives living body information (more specifically, fingerprint image) from an applicant of the business server through a fingerprint sensor mounted on a terminal such as a PC, and also receives an ID from an input unit of the terminal (see FIG. 20-1). The user authentication judging device then notifies the living body authenticating server of the received ID and the living body information, and the living body authenticating server executes the "1:1 authentication" method in which the living body information corresponding to the received ID in the registered living body information (more specifically, fingerprint characteristics) of each user registered as the user of the business server is verified with the received living body information.

The living body authenticating server in the user authentication judging system according to the fourth embodiment stores therein user group information that is information on each group to which each user belongs, as user information. For example, as illustrated in FIG. 20-1, the living body authenticating server stores therein user information, e.g., a "department group" of a user having the "user ID: 0004" is the "sales department", and a "title group" is "none".

In the user authentication judging system according to the fourth embodiment, similar to the third embodiment, the environment authenticating server stores therein proper environment information of the business server, and the user authentication judging device stores therein a proper environment judging threshold set for each piece of the proper environment information. For example, as illustrated in FIG. 20-1, the environment authenticating server in the user authentication judging system according to the fourth embodiment stores therein proper environment information of the business server, such as access the business server (basic (at login)), access the sales department's database, access the research and development department's database, and access the database by title (above general manager), in association with "environment IDs".

The user authentication judging device in the user authentication judging system in the fourth embodiment, for example, as illustrated in FIG. 20-1, stores therein a proper environment judging threshold for each of the "environment IDs". For example, the user authentication judging device stores therein the "verification threshold: 5" adjusted so that an "indicator for the false acceptance rate is one ten-thousandth" as the proper environment threshold of the "environment ID: 3" that indicates "access the research and development department's database".

The user authentication judging device in the user authentication judging system according to the fourth embodiment collects changed environment information that is information on the changed use environment, while detecting that the applicant has changed the use environment of the business server, and notifies the environment authenticating server in the user authentication judging system according to the third embodiment of the collected changed environment information. Only if the notified changed environment information matches with any piece of the proper environment information, the environment authenticating server determines to authenticate the changed environment information. If the notified changed environment information does not match with any piece of the proper environment information, the environment authenticating server does not determine to authenticate the changed environment information, and notifies the user authentication judging device of the judgment result.

As illustrated in FIG. 20-2 (A), when the user having the "user ID: 0004" authenticated to access the business server by the "verification threshold: 3" further tries to "access the research and development department's database" of the business server from the own terminal as an applicant, the user authentication judging device collects the "changed environment information: access the research and development department's database", and notifies the environment authenticating server of the collected information. If the notified "changed environment information: access the research and development department's database" matches with the "environment ID: 3" stored therein as the proper environment information, the environment authenticating server determines to authenticate the changed environment information, and notifies the user authentication judging device of the judgment result. In other words, the process flow from the detection of the changed use environment to the notification of the environment authentication judgment result is the same as that of the third embodiment.

The user authentication judging device according to the fourth embodiment, as illustrated in FIG. 20-2 (A), if the "changed environment information: access the research and development department's database" is authenticated as the "environment ID: 3", for example, as illustrated in FIG. 20-2 (B), instructs the applicant having the "user ID: 0004" to provide an ID and a fingerprint image, by displaying "please enter your ID" and "please place your finger on the fingerprint sensor" on the monitor of the applicant's terminal. Upon receiving the ID and the living body information from the applicant, the user authentication judging device notifies the living body authenticating server of them with the authenticated changed environment information (environment ID: 3). The user authentication judging device in the user authentication judging system according to the third embodiment also instructs the living body authenticating server to further refer to the user group information as user information, while the living body authenticating server performs authentication judgment by verifying the living body information received from the applicant with the registered living body information.

The living body authenticating server in the user authentication judging system according to the fourth embodiment, as illustrated in FIG. 20-2 (B), sets the '"verification threshold: 5" adjusted so that an "indicator for the false acceptance rate is one ten-thousandth"' that is the proper environment judging threshold corresponding to the received "environment ID: 3", as an object to be compared with the similarity. The living body authenticating server then extracts fingerprint characteristics from the received fingerprint image of the applicant as verification data, and calculates the similarity by verifying the extracted fingerprint characteristics with the fingerprint characteristics corresponding to the received ID as registered living body information. For example, if the calculated similarity is equal to or more than the proper environment judging threshold set as the "verification threshold: 5", the living body authenticating server authenticates the applicant (user ID: 0004) as a user. However, at this time, the living body authenticating server also refers to the user group information, and if the department group of the "user ID: 0004" is the "sales department", the living body authenticating server does not judge the applicant as an authenticated user, and notifies the user authentication judging device of the judgment result (see FIG. 20-2(B)). Accordingly, the user authentication judging device prevents the applicant from accessing the research and development department's database and referring the data.

In the present embodiment, the "1:1 authentication" method is performed. However, the present invention is not limited thereto, and the "1:N authentication" method may also be performed.

In this manner, the user authentication judging system according to the fourth embodiment, similar to FIGS. 1 to 3, can execute personal authentication with optimum authentication accuracy, depending on the use environment of the business server. Accordingly, it is possible to balance user convenience with use-environment-adjusted security. The system administrator can integrally manage and control the use environment of the information processing device used by the employees. Consequently, it is possible to prevent dangers, such as information being stolen and altered, by integrally managing and controlling the registered living body information that is personal information on the user. As a result, it is possible to balance convenience of the system administrator with use-environment-adjusted security of information important to the company organization.

### Configuration of User Authentication Judging Device according to Fourth Embodiment

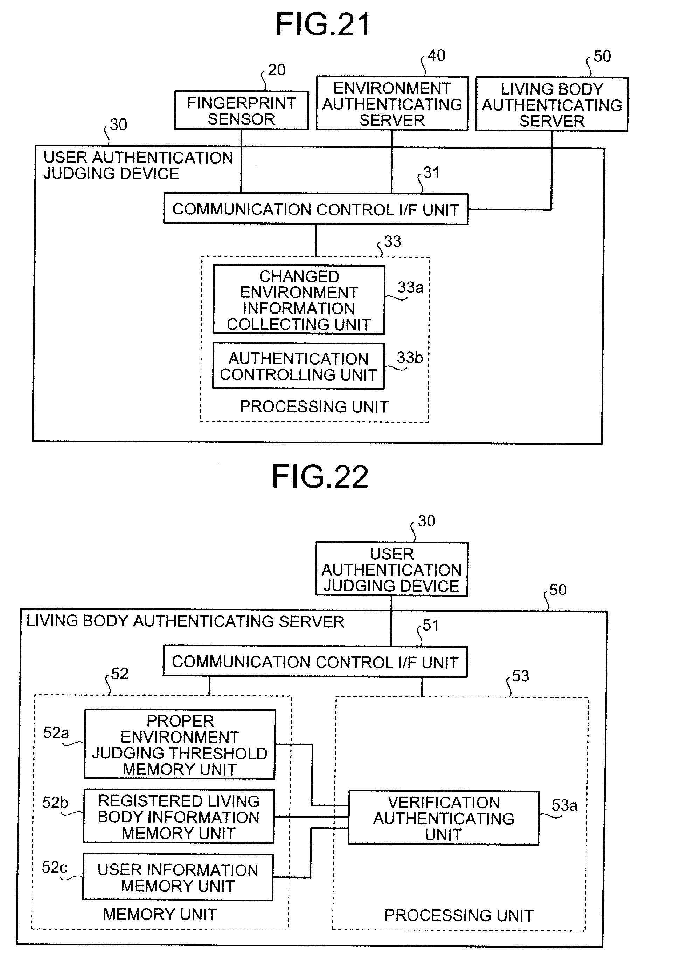

With reference to FIG. 21, the configuration of the user authentication judging device according to the fourth embodiment will be described. FIG. 21 is a schematic of the user authentication judging device according to the fourth embodiment.

As illustrated in FIG. 21, this user authentication judging device 30 according to the fourth embodiment is different from the user authentication judging device 30 according to the third embodiment illustrated in FIG. 13, in being connected with a living body authenticating server 50, and in only including the changed environment information collecting unit 33a and the authentication controlling unit 33b of the processing unit 33. The user authentication judging device 30 is incorporated into the business server as an information processing device.

The changed environment information collecting unit 33a collects changed environment information that is information on the changed use environment, while detecting that the applicant has changed the use environment of the information processing device (business server), and notifies the environment authenticating server 40 of the result through the communication control I/F unit 31. For example, if the applicant (user ID: 0004) tries to "access the research and development department's database" of the business server through the own terminal, the changed environment information collecting unit 33a collects the "changed environment information: access the research and development department's database", and notifies the environment authenticating server 40 of the collected information.

Upon receiving the judgment result indicating that the "changed environment information is authenticated" from the environment authenticating server 40, the authentication controlling unit 33b instructs the applicant to provide an ID and living body information. In other words, if the "changed environment information: access the research and development department's database" is authenticated as the "environment ID: 3" in the environment authenticating server 40, for example, as illustrated in FIG. 20-2 (B), the authentication controlling unit 33b instructs the applicant having the "user ID: 0004" to provide an ID and a fingerprint image, by displaying "please enter your ID" and "please place your finger on the fingerprint sensor", on the monitor of the applicant's terminal.

The authentication controlling unit 33b notifies the living body authenticating server 50 of the received ID and the living body information, through the communication control I/F unit 31, with the authenticated changed environment information. The authentication controlling unit 33b also receives the authentication judgment result from the living body authenticating server 50 through the communication control I/F unit 31, and if the judgment result is "applicant is authenticated as a user", the authentication controlling unit 33b authorizes the applicant to use the business server, and if the judgment result is "applicant is not authenticated as a user", the authentication controlling unit 33b instructs rejection of the applicant's using the business server.

Because the configuration of the environment authenticating server 40 according to the fourth embodiment is the same as that of the environment authenticating server 40 according to the third embodiment described with reference to FIG. 16, descriptions thereof are omitted.

### Configuration of Living Body Authenticating Server according to Fourth Embodiment

With reference to FIG. 22, the configuration of the living body authenticating server according to the fourth embodiment will be described. FIG. 22 is a schematic of the living body authenticating server according to the fourth embodiment.

As illustrated in FIG. 22, the living body authenticating server 50 according to the fourth embodiment includes a communication control I/F unit 51, a memory unit 52, and a processing unit 53, and is connected to the user authentication judging device 30.

The communication control I/F unit 51 controls data transmission between the user authentication judging device 30, and the memory unit 52 and the processing unit 53.

The memory unit 52 stores therein data used for various types of processing performed by the processing unit 53. As those closely related to the present invention, as illustrated in FIG. 13, the memory unit 52 includes a proper environment judging threshold memory unit 52a, a registered living body information memory unit 52b, and a user information memory unit 52c.

The proper environment judging threshold memory unit 52a stores therein a proper environment judging threshold that is a judging threshold set for each piece of the proper environment information stored in the environment authenticating server 40. For example, the proper environment judging threshold memory unit 52a stores therein the same contents as those stored in the proper environment judging threshold memory unit 52a installed in the user authentication device 30 according to the third embodiment (see FIG. 14).

The registered living body information memory unit 52b stores therein registered living body information that is living body information on a person registered as a user of the information processing device (business server) in advance in association with the ID of each user. For example, the registered living body information memory unit 52b stores therein fingerprint characteristics extracted from the fingerprint image received from the user of the business server in association with the ID of each user.

The user information memory unit 52c stores therein user group information that is information on each group to which each user belongs as user information. For example, the user information memory unit 52c stores therein the same contents as those stored in the user information memory unit 32c in the user authentication device 30 according to the third embodiment (see FIG. 15).

The processing unit 53 executes various types of processing based on data transmitted from the communication control I/F unit 51. As those closely related to the present invention, as illustrated in FIG. 22, the processing unit 53 includes a verification authenticating unit 53a.

The verification authenticating unit 53a sets a proper environment judging threshold corresponding to the changed environment information received from the user authentication judging device 30 as an object to be compared with the similarity. For example, the verification authenticating unit 53a sets the '"verification threshold: 5" adjusted so that an "indicator for the false acceptance rate is one ten-thousandth"' that is the proper environment judging threshold corresponding to the "environment ID: 3", as an object to be compared with the similarity.

The verification authenticating unit 53a, for example, extracts fingerprint characteristics from the fingerprint image of the applicant received from the user authentication judging device 30 as verification data, and calculates the similarity by verifying the extracted fingerprint characteristics with the fingerprint characteristics (held in the registered living body information memory unit 52b) corresponding to the ID received from the user authentication judging device 30 as registered living body information. If the calculated similarity is equal to or more than the proper environment judging threshold set as the "verification threshold: 5", the verification authenticating unit 53a authenticates the applicant (user ID: 0004) as a user. However, at this time, (the authentication controlling unit 33b of) the user authentication judging device 30 instructs the verification authenticating unit 53a to refer the user group information stored in the user information memory unit 52c. If the department group of the "user ID: 0004" is the "sales department", the verification authenticating unit 53a does not judge the applicant as an authenticated user (see FIG. 20-2 (B)). The judgment result obtained by the verification authenticating unit 53a is notified to the user authentication judging device 30, through the communication control I/F unit 51.

### Procedure of Process Performed by User Authentication Judging System according to Fourth Embodiment

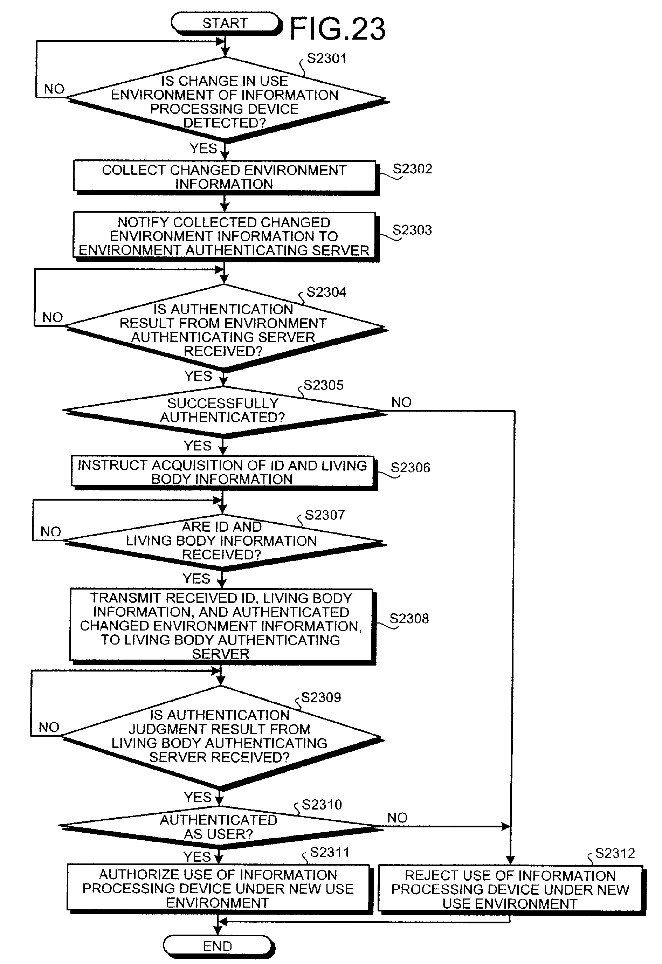

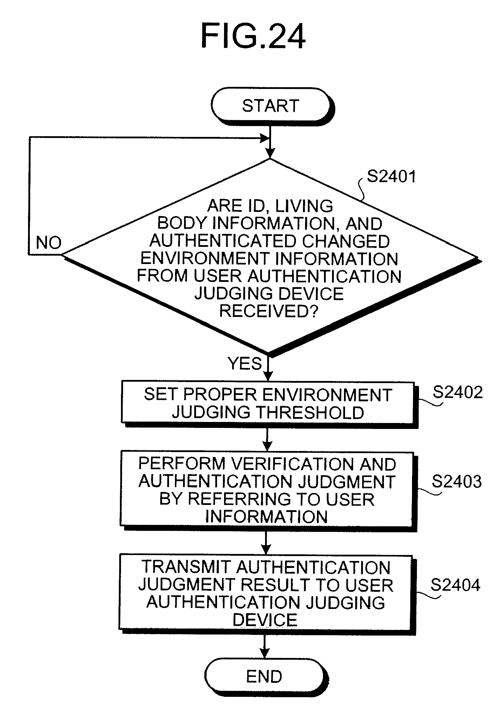

With reference to FIG. 23 and FIG. 24, a process performed by the user authentication judging system according to the fourth embodiment will be described. FIG. 23 is a schematic for explaining a process performed by the user authentication judging device according to the fourth embodiment. FIG. 24 is a schematic for explaining a process performed by the living body authenticating server according to the fourth embodiment. Because the procedure of a process performed by the environment authenticating server according to the fourth embodiment is the same as the procedure of the process performed by the environment authenticating server according to the third embodiment described with reference to FIG. 19, descriptions thereof are omitted.

### Procedure of Process Performed by User Authentication Judging Device according to Fourth Embodiment

As illustrated in FIG. 23, on detecting the change in the use environment of the business server as an information processing device (YES at Step S2301), the changed environment information collecting unit 33a in the user authentication judging device 30 according to the fourth embodiment collects changed environment information that is information on the changed use environment (Step S2302), and notifies the environment authenticating server 40 of the collected changed environment information through the communication control I/F unit 31 (Step S2303).

Upon receiving the authentication judgment result from the environment authenticating server 40 (YES at Step S2304), if the received authentication judgment result is not "successfully authenticated" (NO at Step S2305), the authentication controlling unit 33b prevents the applicant from using the information processing device (business server) under the new use environment (Step S2312), and finishes the process.

Alternatively, if the received authentication judgment result is "successfully authenticated" (YES at Step S2305), the authentication controlling unit 33b controls authentication judgment by instructing acquisition of an ID and living body information from the applicant (Step S2306).

Upon receiving the ID and the living body information from the applicant (YES at Step S2307), the authentication controlling unit 33b transmits the received ID and living body information to the living body authenticating server 50, with the changed environment information authenticated by the environment authenticating server 40 (Step S2308).

Upon receiving the authentication judgment result from the living body authenticating server 50 (YES at Step S2309), if the received authentication judgment result authenticates the applicant as a user (YES at Step S2310), the authentication controlling unit 33b authorizes the applicant to use the information processing device (business server) under the new use environment (Step S2311), and finishes the process.

Alternatively, if the received authentication judgment result does not authenticate the applicant as a user (NO at Step S2310), the authentication controlling unit 33b prevents the applicant from using the information processing device (business server) under the new use environment (Step S2312), and finishes the process.

### Procedure of Process Performed by Living Body Authenticating Server according to Fourth Embodiment

As illustrated in FIG. 24, in the living body authenticating server 50 according to the fourth embodiment, upon receiving the ID and the living body information of the applicant, and the changed environment information authenticated by the environment authenticating server 40 from the user authentication judging device 30 (YES at Step S2401), the verification authenticating unit 53a sets a proper environment judging threshold corresponding to the changed environment information received from the user authentication judging device 30, as an object to be compared with the similarity (Step S2402). This process is instructed by the authentication controlling unit 33b in the user authentication judging device 30.

The authentication controlling unit 33b in the user authentication judging device 30 instructs the verification authenticating unit 53a to perform verification and authentication judgment using the proper environment judging threshold, by referring to the user group information stored in the user information memory unit 52c (Step S2403).

The verification authenticating unit 53a then transmits the authentication judgment result to the user authentication judging device 30 through the communication control I/F unit 51 (Step S2404), and finishes the process.

### Advantages of Fourth Embodiment

In this manner, according to the fourth embodiment, similar to the first to third embodiments, the user authentication judging system can execute personal authentication with optimum authentication accuracy, depending on the use environment of the business server. Accordingly, it is possible to balance user convenience with use-environment-adjusted security. Because the environment authentication is executed in the environment authenticating server, and the biometric authentication is executed in the living body authenticating server, the system administrator can integrally manage and control the use environment of the information processing device used by the employees. Consequently, it is possible to prevent dangers, such as information being stolen and altered by integrally managing and controlling the registered living body information that is personal information of the user. As a result it is possible to balance convenience of the system administrator with use-environment-adjusted security of information important to the company organization.

### Fifth Embodiment

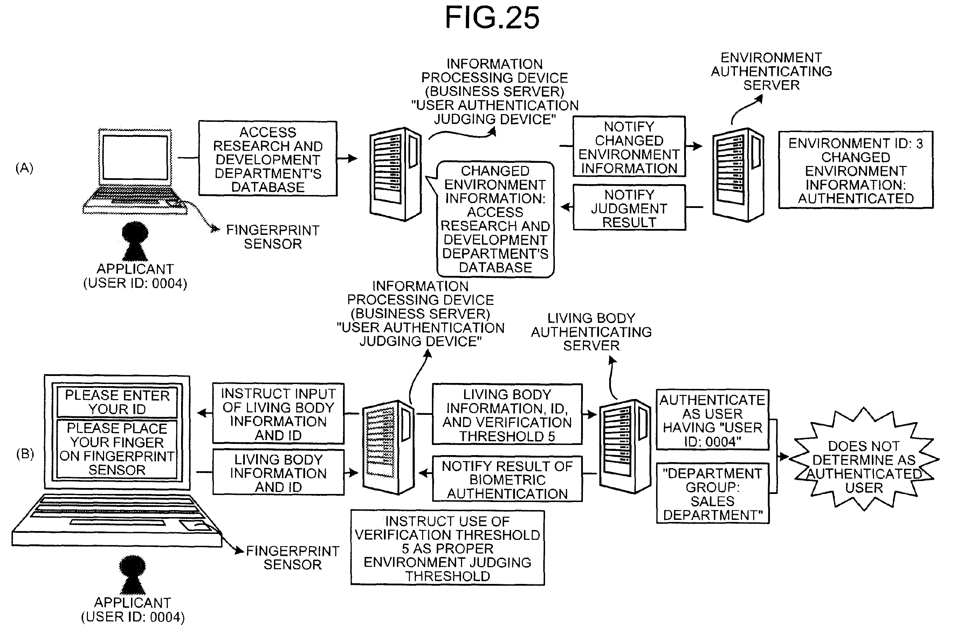

In the above-described fourth embodiment, the setting of the proper environment judging threshold is carried out in the living body authenticating server. In a fifth embodiment, with reference to FIG. 25, the setting of the proper environment judging threshold carried out in the user authentication judging device will be described. FIG. 25 is schematic for explaining a user authentication judging system according to the fifth embodiment.

Similar to the fourth embodiment, the user authentication judging system according to the fifth embodiment includes the user authentication judging device, and the environment authenticating server and the living body authenticating server connected to the user authentication judging device through the communication network. The user authentication judging system according to the fifth embodiment is different from that of the fourth embodiment, in having the user authentication judging device hold the "proper judging threshold for each environment ID", instead of the living body authenticating server described in FIG. 20-1.

In other words, similar to the fourth embodiment, in the fifth embodiment, as illustrated in FIG. 25(A), when the user having the "user ID: 0004" tries to "access the research and development department's database" of the business server from the own terminal as an applicant, the user authentication judging device collects the "changed environment information: access the research and development department's database", and notifies the environment authenticating server of the collected information. If the notified "changed environment information: access the research and development department's database" matches with the "environment ID: 3" stored therein as the proper environment information, the environment authenticating server determines to authenticate the changed environment information, and notifies the user authentication judging device of the judgment result.

As illustrated in FIG. 25(A), if the "changed environment information: access the research and development department's database" is authenticated as the "environment ID: 3", the user authentication judging device according to the fifth embodiment, as illustrated in FIG. 25(B), for example, instructs the applicant having the "user ID: 0004" to provide an ID and a fingerprint image, by displaying "please enter your ID" and "please place your finger on the fingerprint sensor" on the monitor of the applicant's terminal.

The user authentication judging device according to the fifth embodiment, as illustrated in FIG. 25(B) instructs setting of the '"verification threshold: 5" adjusted so that an "indicator for the false acceptance rate is one ten-thousandth"' that is the proper environment judging threshold corresponding to the "environment ID: 3", as an object to be compared with the similarity. Upon receiving the ID and the living body information from the applicant, the user authentication judging device notifies the living body authenticating server of the ID and the living body information of the applicant and the set "verification threshold: 5".

The living body authenticating server in the user authentication judging system according to the fifth embodiment, similar to the fourth embodiment, as illustrated in FIG. 25(B), extracts fingerprint characteristics from the received fingerprint image of the applicant as verification data, and calculates the similarity by verifying the extracted fingerprint characteristics with the fingerprint characteristics corresponding to the received ID as registered living body information. For example, if the calculated similarity is equal to or more than the received proper environment judging threshold, the living body authenticating server authenticates the applicant (user ID: 0004) as a user. However, at this time, the living body authenticating server also refers to the user group information, and if the department group of the "user ID: 0004" is the "sales department", the living body authenticating server does not judge the user as an authenticated user (see FIG. 20-2(B)), and notifies the user authentication judging device of the judgment result.

In the third to fifth embodiments, the user group information is further referred to as user information. However, the present invention is not limited thereto, and similar to the second embodiment, personal information on the user registered as user information may further be referred.

In the first to fifth embodiments, the "fingerprint" was used as living body information. However, the present invention is not limited thereto, and for example, other living body information such as a "palm vein pattern", an "eye iris", a "finger vein pattern", and "face image data" may also be used.

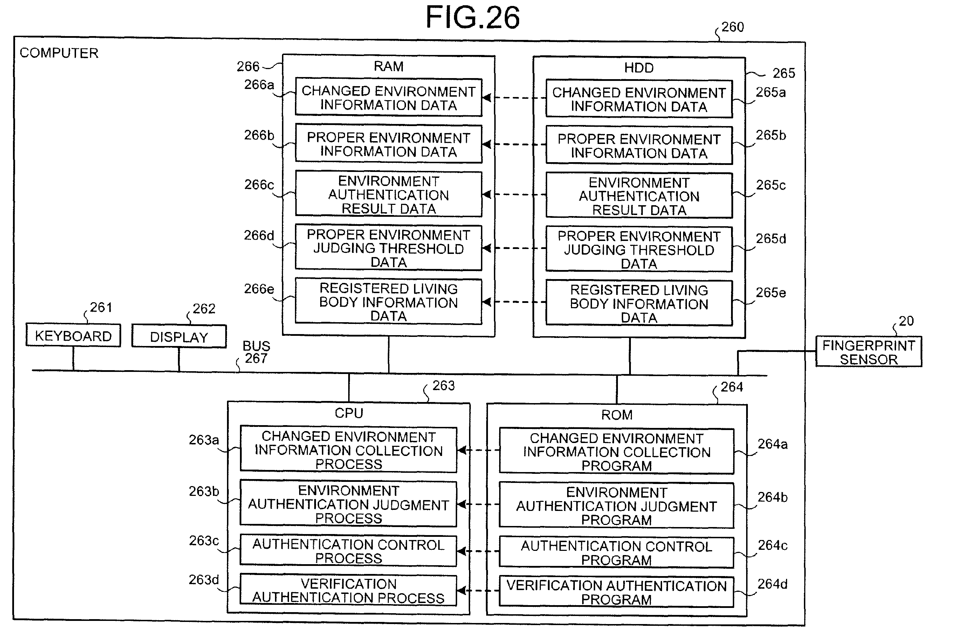

In the first to fifth embodiments, various types of processing are performed by hardware logic. However, the present invention is not limited thereto, and the processing may be realized by executing prepared computer programs with a computer. In the following, with reference to FIG. 26, an example of a computer that executes a user authentication judging program, having a function similar to that of the user authentication judging device 10 according to the first embodiment will be described. FIG. 26 is a schematic of a computer that executes a user authentication judging program according to the first embodiment.

As illustrated in FIG. 26, a computer 260 used as an information processing device is connected to a keyboard 261, a display 262, a computer processing unit (CPU) 263, a read-only-memory (ROM) 264, a hard disk drive (HDD) 265, and a random access memory (RAM) 266 through a bus 267 and the like, and is also connected to the fingerprint sensor 20.

The ROM 264 includes a user authentication judging program that exhibits the same function as that of the user authentication judging device 10 according to the first embodiment. In other words, as illustrated in FIG. 26, the ROM 264 stores therein a changed environment information collection program 264a, an environment authentication judgment program 264b, an authentication control program 264c, and a verification authentication program 264d in advance. Similar to the constituent elements of the user authentication judging device 10 illustrated in FIG. 2, the computer programs 264a to 264d may be appropriately integrated or dispersed.

When the CPU 263 reads and executes the computer programs 264a to 264d from the ROM 264, as illustrated in FIG. 26, each of the computer programs 264a to 264d functions as a changed environment information collection process 263a, an environment authentication judgment process 263b, an authentication control process 263c, and a verification authentication process 263d. The processes 263a to 263d correspond, respectively, to the changed environment information collecting unit 15a, the environment authentication judging unit 15b, the authentication controlling unit 15c, and the verification authenticating unit 15d illustrated in FIG. 2.

The HDD 265, as illustrated in FIG. 26, includes changed environment information data 265a, proper environment information data 265b, environment authentication result data 265c, proper environment judging threshold data 265d, and registered living body information data 265e. The changed environment information data 265a corresponds to the changed environment information memory unit 14a used in FIG. 2, the proper environment information data 265b corresponds to the proper environment information memory unit 14b, the environment authentication result data 265c corresponds to the environment authentication result memory unit 14c, the proper environment judging threshold data 265d corresponds to the proper environment judging threshold memory unit 14d, and the registered living body information data 265e corresponds to the registered living body information memory unit 14e. The CPU 263 registers changed environment information data 266a to the changed environment information data 265a, proper environment information data 266b to the proper environment information data 265b, environment authentication result data 266c to the environment authentication result data 265c, proper environment judging threshold data 266d to the proper environment judging threshold data 265d, and registered living body information data 266e to the registered living body information data 265e. The CPU 263 reads the changed environment information data 266a, the proper environment information data 266b, the environment authentication result data 266c, the proper environment judging threshold data 266d, and the registered living body information data 266e, and stores in the RAM 266. The CPU 263 executes user authentication judgment process based on the changed environment information data 266a, the proper environment information data 266b, the environment authentication result data 266c, the proper environment judging threshold data 266d, and the registered living body information data 266e stored in the RAM 266.

The above-described computer programs 264a to 264d need not be stored in the ROM 264 in advance, but for example, may be stored in a "portable physical medium" such as a flexible disk (FD), computer disk read only memory (CD-ROM), a magneto optical (MO) disk, a digital versatile disk (DVD), a magneto optical disk, and an integrated circuit (IC) card that can be inserted into the computer 260, in a "fixed physical medium" such as an HDD provided inside and outside of the computer 260, and in "another computer (or server)" connected to the computer 260 through a public line, the Internet, a local area network (LAN), and a wide area network (WAN). The computer 260 can read each computer program therefrom, and execute it.

The information including the process procedure, specific names, and various kinds of data and parameters illustrated in the specification or in the drawings (such as proper environment and proper environment judging threshold) can be optionally updated, unless otherwise specified.

The respective constituents of the illustrated devices are functionally conceptual, and need not necessarily be physically configured as illustrated. In other words, the specific mode (such as the mode in FIG. 2) of dispersion and integration of each processing unit and each memory unit is not limited to the ones illustrated in the drawings, and all or a part thereof can be functionally or physically dispersed or integrated in an optional unit, depending on various kinds of load and the status of use, e.g., by integrating the authentication controlling unit 15c and the verification authenticating unit 15d. All or an optional part of the respective processing functions carried out in each device are realized by a CPU and a computer program analyzed and executed by the CPU, or may be realized as hardware by the wired logic.

### INDUSTRIAL APPLICABILITY

In this manner, the user authentication judging device, the user authentication judging system, the user authentication judging program, and the user authentication judging method according to the present invention are useful for authenticating an applicant of an information processing device as a user. More specifically, the user authentication judging device, the user authentication judging system, the user authentication judging program, and the user authentication judging method according to the present invention can suitably balance user convenience with use-environment-adjusted security.

## Claims

1. A user authentication judging device that, when similarity calculated by verifying living body information received from an applicant of an information processing device with registered living body information that is living body information on a person registered as a user of the information processing device in advance is equal to or more than a judging threshold set in advance, determines to authenticate the applicant as the user, the user authentication judging device comprising:
a proper environment information memory unit that stores therein proper environment information that is information on an environment considered appropriate for a use environment of the information processing device;
a proper environment judging threshold memory unit that stores therein a proper environment judging threshold that is the judging threshold set for each piece of the proper environment information stored in the proper environment information memory unit;
a changed environment information collecting unit that detects a change in the use environment of the information processing device and collects changed environment information that is information on a changed use environment;
an environment authentication judging unit that, when the changed environment information collected by the changed environment information collecting unit matches with any piece of the proper environment information stored in the proper environment information memory unit, determines to authenticate the changed environment information, and when the changed environment information collected by the changed environment information collecting unit does not match with any piece of the proper environment information stored in the proper environment information memory unit, determines not to authenticate the changed environment information;
an authentication controlling unit that, when the environment authentication judging unit authenticates the changed environment information, controls authentication judgment by instructing reception of living body information from the applicant, and by instructing setting of a proper environment judging threshold corresponding to the proper environment information matched with the changed environment information, among the proper environment judging threshold stored in the proper environment judging threshold memory unit, as an object to be compared with the similarity; and
a verification authenticating unit that, upon receiving the living body information from the applicant, performs authentication judgment and verification of the living body information received from the applicant with the registered living body information, by using the proper environment judging threshold that the authentication controlling unit instructs to set as the object to be compared with the similarity.

2. The user authentication judging device according to claim 1, wherein the authentication controlling unit controls authentication judgment to authorize a use of the information processing device only when the verification authenticating unit determines to authenticate the applicant as the user.

3. The user authentication judging device according to claim 2, wherein the user is present in plurality, the user authentication judging device further comprising:
a user information memory unit that stores therein user information that is personal information on each of the plurality of users, and
the authentication controlling unit instructs the verification authenticating unit to further refer to the user information stored in the user information memory unit, while the verification authenticating unit performs authentication judgment and verification of the living body information received from the applicant with the registered living body information.

4. The user authentication judging device according to claim 3, wherein
the user information memory unit stores therein user group information that is information on each group to which each user belongs, and
the authentication controlling unit instructs the verification authenticating unit to further refer to the user group information stored in the user information memory unit, while the verification authenticating unit performs authentication judgment and verification of the living body information received from the applicant with the registered living body information.

5. A user authentication judging system that includes a user authentication judging device and an environment authenticating server, and that, when similarity calculated by verifying living body information received from an applicant of an information processing device with registered living body information that is living body information on a person registered as a user of the information processing device in advance is equal to or more than a judging threshold set in advance, determines to authenticate the applicant as the user,
the user authentication judging device comprising
a proper environment judging threshold memory unit that stores therein a proper environment judging threshold that is the judging threshold set for each piece of proper environment information that is information on an environment considered appropriate for a use environment of the information processing device,
a changed environment information collecting unit that detects a change in the use environment of the information processing device and collects changed environment information that is information on a changed use environment,
an environment information notifying unit that notifies the environment authenticating server of the changed environment information collected by the changed environment information collecting unit,
an authentication controlling unit that, when a judgment result notified from the environment authenticating server authenticates the changed environment information, controls authentication judgment by instructing reception of living body information from the applicant, and by instructing setting of a proper environment judging threshold corresponding to the proper environment information matched with the changed environment information, among the proper environment judging threshold stored in the proper environment judging threshold memory unit, as an object to be compared with the similarity, and
a verification authenticating unit that, upon receiving the living body information from the applicant, performs authentication judgment and verification of the living body information received from the applicant with the registered living body information, by using the proper environment judging threshold that the authentication controlling unit instructs to set as the object to be compared with the similarity, and
the environment authenticating server comprising
a proper environment information memory unit that stores therein the proper environment information,
an environment authentication judging unit that, when the changed environment information notified from the user authentication judging device by the environment information notifying unit matches with any piece of the proper environment information stored in the proper environment information memory unit, determines to authenticate the changed environment information, and when the changed environment information notified from the user authentication judging device does not match with any piece of the proper environment information stored in the proper environment information memory unit, determines not to authenticate the changed environment information, and
a judgment result notifying unit that notifies the user authentication judging device of a judgment result of the changed environment information made by the environment authentication judging unit.

6. A user authentication judging system that includes a user authentication judging device, an environment authenticating server, and a living body authenticating server, and that, when similarity calculated by verifying living body information received from an applicant of an information processing device with registered living body information that is living body information on a person registered as a user of the information processing device in advance is equal to or more than a judging threshold set in advance, determines to authenticate the applicant as the user,
the user authentication judging device comprising
a changed environment information collecting unit that detects a change in a use environment of the information processing device and collects changed environment information that is information on a changed use environment,
an environment information notifying unit that notifies the environment authenticating server of the changed environment information collected by the changed environment information collecting unit,
an authentication controlling unit that controls authentication judgment by instructing reception of living body information from the applicant, when a judgment result notified from the environment authenticating server authenticates the changed environment information, and
an authentication data notifying unit that, upon receiving the living body information from the applicant, transmits the living body information thus received and the changed environment information thus authenticated to the living body authenticating server,
the environment authenticating server comprising
a proper environment information memory unit that stores therein proper environment information that is information on an environment considered appropriate for the use environment of the information processing device,
an environment authentication judging unit that, when the changed environment information notified from the user authentication judging device by the environment information notifying unit matches with any piece of the proper environment information stored in the proper environment information memory unit, determines to authenticate the changed environment information, and when the changed environment information notified from the user authentication judging device does not match with any piece of the proper environment information stored in the proper environment information memory unit, determines not to authenticate the changed environment information, and
a judgment result notifying unit that notifies the user authentication judging device of a judgment result of the changed environment information made by the environment authentication judging unit, and
the living body authenticating server comprising
a registered living body information memory unit that stores therein the registered living body information,
a proper environment judging threshold memory unit that stores therein a proper environment judging threshold that is the judging threshold set for each piece of the proper environment information,
a verification authenticating unit that performs verification and authentication judgment by comparing the similarity calculated by verifying the living body information of the applicant notified from the user authentication judging device by the authentication data notifying unit with the registered living body information stored in the registered living body information memory unit, and a proper environment judging threshold corresponding to the proper environment information matched with the authenticated changed environment information notified from the user authentication judging device by the authentication data notifying unit, among the proper environment judging threshold stored in the proper environment judging threshold memory unit, and
an authentication judgment result notifying unit that notifies the user authentication judging device of a result of the authentication judgment obtained by the verification authenticating unit.

7. A user authentication judging system that includes a user authentication judging device, an environment authenticating server, and a living body authenticating server, and that, when similarity calculated by verifying living body information received from an applicant of an information processing device with registered living body information that is living body information on a person registered as a user of the information processing device in advance is equal to or more than a judging threshold set in advance, determines to authenticate the applicant as the user,
the user authentication judging device comprising
a proper environment judging threshold memory unit that stores therein a proper environment judging threshold that is the judging threshold set for each piece of proper environment information that is information on an environment considered appropriate for a use environment of the information processing device,
a changed environment information collecting unit that detects a change in the use environment of the information processing device and collects changed environment information that is information on a changed use environment,
an environment information notifying unit that notifies the environment authenticating server of the changed environment information collected by the changed environment information collecting unit,
an authentication controlling unit that, when a judgment result notified from the environment authenticating server authenticates the changed environment information, controls authentication judgment by instructing reception of living body information from the applicant, and by instructing setting of a proper environment judging threshold corresponding to the proper environment information matched with the changed environment information, among the proper environment judging threshold stored in the proper environment judging threshold memory unit, as an object to be compared with the similarity, and
an authentication data notifying unit that, upon receiving the living body information from the applicant, transmits received living body information and the proper environment judging threshold that the authentication controlling unit instructs to set as the object to be compared with the similarity to the living body authenticating server,
the environment authenticating server comprising
a proper environment information memory unit that stores therein the proper environment information,
an environment authentication judging unit that, when the changed environment information notified from the user authentication judging device by the environment information notifying unit matches with any piece of the proper environment information stored in the proper environment information memory unit, determines to authenticate the changed environment information, and when the changed environment information notified from the user authentication judging device does not match with any piece of the proper environment information stored in the proper environment information memory unit, determines not to authenticate the changed environment information, and
a judgment result notifying unit that notifies the user authentication judging device of a judgment result of the changed environment information made by the environment authentication judging unit, and
the living body authenticating server comprising
a registered living body information memory unit that stores therein the registered living body information,
a verification authenticating unit that performs authentication judgment by comparing the similarity calculated by verifying the registered living body information stored in the registered living body information memory unit with the living body information of the applicant notified from the user authentication judging device by the authentication data notifying unit, and the proper environment judging threshold notified from the user authentication judging device by the authentication data notifying unit, and
an authentication judgment result notifying unit that notifies the user authentication judging device of a result of the authentication judgment obtained by the verification authenticating unit.

8. The user authentication judging system according to any one of claims 5 to 7, wherein the authentication controlling unit controls authentication judgment to authorize a use of the information processing device only when the verification authenticating unit determines to authenticate the applicant as the user.

9. The user authentication judging system according to claim 8, wherein
the user is present in plurality,
the user authentication judging device or the living body authenticating server further includes a user information memory unit that stores therein user information that is personal information on each of the plurality of users, and
the authentication controlling unit instructs the verification authenticating unit to further refer to the user information stored in the user information memory unit in the user authentication judging device or the living body authenticating server, while the verification authenticating unit performs authentication judgment and verification of the living body information received from the applicant with the registered living body information.

10. The user authentication judging system according to claim 9, wherein
the user information memory unit stores therein user group information that is information on each group to which each user belongs, and
the authentication controlling unit instructs the verification authenticating unit to further refer to the user group information stored in the user information memory unit in the user authentication judging device or the living body authenticating server, while the verification authenticating unit performs authentication judgment and verification of the living body information received from the applicant with the registered living body information.

11. A user authentication judging program that causes a computer to execute a user authentication judging method for determining to authenticate an applicant as a user, when similarity calculated by verifying living body information received from the applicant of an information processing device with registered living body information that is living body information on a person registered as a user of the information processing device in advance is equal to or more than a judging threshold set in advance, the user authentication judging program causing the computer to execute:
a proper environment information storing procedure of storing proper environment information that is information on an environment considered appropriate for a use environment of the information processing device in a first memory unit;
a proper environment judging threshold storing procedure of storing a proper environment judging threshold that is the judging threshold set for each piece of the proper environment information stored in the first memory unit in a second memory unit;
a changed environment information collecting procedure of collecting changed environment information that is information on a changed use environment, while detecting a change in the use environment of the information processing device;
an environment authentication judging procedure of determining to authenticate the changed environment information when the changed environment information collected at the changed environment information collecting procedure matches with any piece of the proper environment information stored in the first memory unit, and determining not to authenticate the changed environment information when the changed environment information collected at the changed environment information collecting procedure does not match with any piece of the proper environment information stored in the first memory unit;
an authentication controlling procedure of controlling authentication, when the changed environment information is authenticated at the environment authentication judging procedure, by instructing reception of living body information from the applicant, and by instructing setting of a proper environment judging threshold corresponding to the proper environment information matched with the changed environment information, among the proper environment judging threshold stored in the second memory unit, as an object to be compared with the similarity; and
a verification authenticating procedure of performing authentication judgment and verification of the living body information received from the applicant with the registered living body information, upon receiving the living body information from the applicant, by using the proper environment judging threshold set under instruction as the object to be compared with the similarity at the authentication controlling procedure.

12. A user authentication judging method for determining to authenticate an applicant as a user, when similarity calculated by verifying living body information received from an applicant of an information processing device with registered living body information that is living body information on a person registered as a user of the information processing device in advance is equal to or more than a judging threshold set in advance, the user authentication judging method comprising:
a proper environment information storing step of storing proper environment information that is information on an environment considered appropriate for a use environment of the information processing device in a first memory unit;
a proper environment judging threshold storing step of storing a proper environment judging threshold that is the judging threshold set for each piece of the proper environment information stored in the first memory unit in a second memory unit;
a changed environment information collecting step of collecting changed environment information that is information on a changed use environment, while detecting a change in the use environment of the information processing device;
an environment authentication judging step of determining to authenticate the changed environment information when the changed environment information collected at the changed environment information collecting step matches with any piece of the proper environment information stored in the first memory unit, and determining not to authenticate the changed environment information when the changed environment information collected at the changed environment information collecting step does not match with any piece of the proper environment information stored in the first memory unit;
an authentication controlling step of controlling authentication, when the changed environment information is authenticated at the environment authentication judging step, by instructing reception of living body information from the applicant, and by instructing setting of a proper environment judging threshold corresponding to the proper environment information matched with the changed environment information, among the proper environment judging threshold stored in the second memory unit, as an object to be compared with the similarity; and
a verification authenticating step of performing authentication judgment and verification of the living body information received from the applicant with the registered living body information, upon receiving the living body information from the applicant, by using the proper environment judging threshold set under instruction as the object to be compared with the similarity at the authentication controlling step.
